(19) Europäisches Patentamt
European Patent Office
Office européen des brevets

(11) EP 3 680 967 B1

(12) **EUROPEAN PATENT SPECIFICATION**

(45) Date of publication and mention of the grant of the patent:
**13.04.2022 Bulletin 2022/15**

(21) Application number: **17924182.3**

(22) Date of filing: **06.09.2017**

(51) International Patent Classification (IPC):
***H01M 4/38*** *(2006.01)* ***H01M 4/134*** *(2010.01)*
***H01M 4/58*** *(2010.01)*

(52) Cooperative Patent Classification (CPC):
**H01M 4/134; H01M 4/38; H01M 4/58;** Y02E 60/10

(86) International application number:
**PCT/JP2017/032121**

(87) International publication number:
**WO 2019/049239 (14.03.2019 Gazette 2019/11)**

(54) **NEGATIVE ELECTRODE ACTIVE MATERIAL FOR ELECTRICAL DEVICES, METHOD FOR PRODUCING SAME, AND ELECTRICAL DEVICE USING THIS ACTIVE MATERIAL**

NEGATIVELEKTRODENAKTIVMATERIAL FÜR ELEKTRISCHE VORRICHTUNGEN, VERFAHREN ZUR HERSTELLUNG DAVON UND ELEKTRISCHE VORRICHTUNG MIT VERWENDUNG DIESES AKTIVMATERIALS

MATÉRIAU ACTIF D'ÉLECTRODE NÉGATIVE POUR DISPOSITIFS ÉLECTRIQUES, SON PROCÉDÉ DE PRODUCTION, ET DISPOSITIF ÉLECTRIQUE UTILISANT CE MATÉRIAU ACTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.07.2020 Bulletin 2020/29**

(73) Proprietor: **Nissan Motor Co., Ltd.**
**Yokohama-shi, Kanagawa 221-0023 (JP)**

(72) Inventors:
- **ARAI, Masaya**
  **Atsugi-shi**
  **Kanagawa 243-0123 (JP)**
- **WATANABE, Manabu**
  **Atsugi-shi**
  **Kanagawa 243-0123 (JP)**
- **CHIBA, Nobutaka**
  **Atsugi-shi**
  **Kanagawa 243-0123 (JP)**
- **YOSHIOKA, Youichi**
  **Atsugi-shi**
  **Kanagawa 243-0123 (JP)**

(74) Representative: **Grünecker Patent- und Rechtsanwälte**
**PartG mbB**
**Leopoldstraße 4**
**80802 München (DE)**

(56) References cited:
**JP-A- H11 260 567** **JP-A- 2002 367 602**
**JP-A- 2004 311 429** **JP-A- 2008 016 446**
**JP-A- 2009 503 786** **US-A1- 2006 051 675**

- **FEIFEI FAN ET AL: "Mechanical properties of amorphous LiSi alloys: a reactive force field study", MODELLING AND SIMULATION IN MATERIALS SCIENCE AND ENGINEERING, IOP PUBLISHING, BRISTOL, GB, vol. 21, no. 7, 8 October 2013 (2013-10-08), page 74002, XP020251520, ISSN: 0965-0393, DOI: 10.1088/0965-0393/21/7/074002 [retrieved on 2013-10-08]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 680 967 B1

## Description

### TECHNICAL FIELD

The present invention relates to a negative electrode active material for an electric device and a method for manufacturing the same, and an electric device using this active material. The negative electrode active material for an electric device and the electric device using the same of the present invention are used for a driving power source or an auxiliary power source of a motor or the like serving as, for example, a secondary battery, a capacitor, or the like for use in vehicles such as an electric vehicle, a fuel cell vehicle, a hybrid electric vehicle, and a plug-in hybrid electric vehicle.

### BACKGROUND ART

In recent years, it is sincerely desired to reduce the amount of carbon dioxide in order to cope with air pollution or global warming. In the automobile industry, expectations are focused on reduction of an emission amount of carbon dioxide by introduction of an electric vehicle (EV), a hybrid electric vehicle (HEV), a plug-in hybrid electric vehicle (PHEV), or the like. For this reason, development of an electric device such as a secondary battery for driving a motor, the electric device serving as a key for practical use of these vehicles, is actively pursued.

The secondary battery for driving a motor needs to have extremely high output characteristics and high energy as compared with consumer use lithium ion secondary batteries used in mobile phones, notebook personal computers, and the like. Accordingly, a lithium ion secondary battery, which has the highest theoretical energy among all batteries, is attracting attention and is now being developed rapidly.

Generally, a lithium ion secondary battery has a configuration in which a positive electrode formed by applying a positive electrode active material or the like to both sides of a positive electrode current collector using a binder and a negative electrode formed by applying a negative electrode active material or the like to both sides of a negative electrode current collector using a binder are connected through an electrolyte layer and are accommodated in a battery casing.

Conventionally, the negative electrode of the lithium ion secondary battery is made of a carbon/graphite-based material, which is advantageous in charge-discharge cycle life and cost. However, with a carbon/graphite-based negative electrode material, charge and discharge are performed by occlusion and release of lithium ions into and from graphite crystals, and accordingly, there is a disadvantage that a charge-discharge capacity equal to or more than a theoretical capacity of 372 mAh/g obtained from $LiC_6$, which is the maximum lithium introducing compound, is not obtainable. For this reason, it is difficult to obtain a capacity and an energy density which satisfy the level of practical use in vehicle applications from a carbon/graphite-based negative electrode material.

On the other hand, a battery including a negative electrode using a material which can be alloyed with Li has improved energy density as compared with a conventional carbon/graphite-based negative electrode material, and thus the material which can be alloyed with Li is expected as a negative electrode material in vehicle applications. For example, a Si material occludes and releases 3.75 mol of lithium ions per mol as in the following Reaction Formula (A) in charge and discharge, and the theoretical capacity is 3600 mAh/g in $Li_{15}Si_4$ (= $Li_{3.75}Si$).

[Chem. 1]

$$Si + 3.75Li^+ + e^- \rightleftharpoons Li_{3.75}Si \quad (A)$$

However, in the lithium ion secondary battery using a material, which can be alloyed with Li, for the negative electrode, expansion and shrinkage in the negative electrode at the time of charging and discharging is large. For example, volume expansion in the case of occluding the Li ions is about 1.2 times in the graphite material, and meanwhile, when Si and Li are alloyed with each other, the Si material transitions from an amorphous state to a crystalline state and causes a large volume change (about 4 times), and accordingly, there is a problem of decreasing a cycle life of the electrode. Further, in the case of a Si negative electrode active material, a capacity and cycle durability are in a tradeoff relation, and there is a problem in that it is difficult to improve cycle durability while exhibiting a high capacity.

Herein, Patent Literature 1 discloses an invention aimed to provide a non-aqueous electrolyte secondary battery including a negative electrode pellet having a high capacity and an excellent cycle life. Specifically, a silicon-containing alloy is disclosed which is obtained by mixing a silicon powder and a titanium powder by a mechanical alloy method for 60 hours and wet pulverizing and in which a material including a first phase containing silicon as a main body and a second phase containing a silicide of titanium ($TiSi_2$ or the like) is used as a negative electrode active material. Further examples of silicon-containing alloys for lithium-ion battery anodes are disclosed in Patent Literature 2 and 3 and Non-Patent Literature 1.

Citation List

Patent Literature 1: WO 2006/129415 A
Patent Literature 2: US 2006/051675 A1
Patent Literature 3: JP H11 260567 A

Non-Patent Literature 1: Feifei Fan et al., Modelling and Simulation in Materials Science and Engineering, IOP Publishing, Bristol, GB, Vol. 21, No. 7, pp. 74002ff.

## SUMMARY OF INVENTION

### Technical Problem

According to the investigations of the present inventors, although it is described that an electric device such as a lithium ion secondary battery using the negative electrode pellet described in the above Patent Literature 1 can exhibit favorable cycle durability, it was found that such an electric device does not have sufficient cycle durability in some cases.

Further, in a method for manufacturing a negative electrode active material using a mechanical alloy method described in the above Patent Literature 1, a time required for mechanical alloying (process time) is long, and thus it has been desired to still further shorten the process time without battery performance being largely impaired.

In this regard, an object of the present invention is to provide a means capable of improving cycle durability of an electric device such as a lithium ion secondary battery.

Further, another object of the present invention is to provide a means capable of shortening a manufacturing process of a negative electrode active material of an electric device such as a lithium ion secondary battery without battery performance being largely impaired.

### Solution to Problem

The present inventors have conducted intensive studies to solve the above-described problem. As a result, the present inventors have found that the above-described problems can be solved by using, as a negative electrode active material for an electric device, a silicon-containing alloy (also referred to as Si-containing alloy) with a configuration having a specific composition in which a small amount of Li is added to an alloy represented by Si-Sn-M (M: transition metal element), thereby completing the present invention.

Further, the present inventors have found that the above-described problems in manufacturing can be solved by using each metallic raw material component of a Si-containing alloy with a configuration having a specific composition in which a small amount of Li is added to an alloy represented by Si-Sn-M (M: transition metal element) in a mechanical alloy method, thereby completing the present invention.

That is, the present invention relates to a negative electrode active material for an electric device, the negative electrode active material formed from a Si-containing alloy. Further, the Si-containing alloy is characterized by having a composition represented by the following Chemical Formula (1):

[Chem. 2]

$$Si_xSn_yM_zA_aLi_b \qquad (1)$$

(In the above Chemical Formula (1),

M represents one or two or more transition metal elements,
A represents an inevitable impurity, and
x, y, z, a, and b represent values of mass%, wherein $58 \leq x < 100$, $1.5 \leq y < 100$, $23 \leq z < 100$, $0.3 \leq b \leq 0.9$, a represents the balance, and $x + y + z + a + b = 100$.).

Further, a method for manufacturing the negative electrode active material for an electric device of the present invention is characterized by including producing a Si-containing alloy by a mechanical alloy method using a mother alloy having the same composition as that of the Si-containing alloy having a composition represented by the above Chemical Formula (1). Effect

In the Si-containing alloy constituting the negative electrode active material according to the present invention, by adding a small amount of Li to the Si-Sn-M alloy, a high load is not applied to the Si-containing alloy and charge-discharge efficiency/discharge-charge efficiency can be stabilized, and as a result, cycle durability can be improved. Further, by adding a small amount of Li, the discharge capacity can also be improved.

In the method for manufacturing a negative electrode active material according to the present invention, by performing the mechanical alloy method using the respective metal raw material components of the Si-containing alloy, the process time can be significantly shortened without battery performance being largely impaired.

## BRIEF DESCRIPTION OF DRAWINGS

Fig. 1 is a schematic cross-sectional view schematically illustrating the overview of a laminate type flat non-bipolar lithium ion secondary battery as a typical embodiment of an electric device according to the present invention.

Fig. 2 is a perspective view schematically illustrating an exterior of the laminate type flat lithium ion secondary battery as the typical embodiment of the electric device according to the present invention.

Fig. 3 is a diagram illustrating X-ray diffraction spectra acquired for each of Si-containing alloys (negative electrode active materials) of Examples 1 to 4 and Comparative Examples 1 and 2.

Fig. 4 is a diagram illustrating a relation between a discharge capacity retention rate [%] after 50 cycles and a calculation result of a ratio value (X/Y), values of X and Y defined below being obtained from the X-ray diffraction spectra acquired for each of Si-containing alloys (negative electrode active materials) of Examples 1 to 4 and Comparative Examples 1 and 2. Herein, X represents a diffraction peak intensity of a (311) plane of $TiSi_2$ having a C54 structure in a range of $2\theta = 38$ to 40°. Further, Y represents a diffraction peak intensity of a (111) plane of Si in a range of $2\theta = 27$ to 29°.

Fig. 5 is a diagram illustrating a relation between the number of cycles and a capacity retention rate, while a charge and discharge test for each of batteries of Examples 1 to 4 and Comparative Example 1 is performed 1 to 50 cycles and ratios of a discharge capacity at the n-th cycle to a discharge capacity at the first cycle (a discharge capacity retention rate [%] per each cycle) are respectively obtained. Herein, n is an integer of 2 to 50.

Fig. 6 is a diagram illustrating a relation between a discharge capacity and a capacity retention rate, while a charge and discharge test for each of batteries of Examples 1 to 4 and Comparative Examples 1 and 2 is performed 1 to 50 cycles and ratios of a discharge capacity at the 50-th cycle to a discharge capacity at the first cycle (a discharge capacity retention rate [%] after 50 cycles) are obtained.

Fig. 7 is a diagram illustrating charge-discharge efficiency, discharge-charge efficiency, and authentic efficiency of Example 3.

Fig. 8 is a diagram illustrating charge-discharge efficiency, discharge-charge efficiency, and authentic efficiency of Comparative Example 1.

## DESCRIPTION OF EMBODIMENTS

Hereinafter, embodiments of a negative electrode active material for an electric device, a method for manufacturing the same, and a negative electrode for an electric device and an electric device which are formed by using the same of the present invention will be described while referring to the drawings. Here, the technical scope of the present invention should be defined based on the description of claims and is not limited only to the following embodiment. Incidentally, in the description of the drawings, the same components are given the same reference numerals, and duplicate descriptions are omitted. Further, the dimensional proportions in the drawings are exaggerated for convenience of explanation and are different from actual proportions in some cases.

Hereinafter, a basic configuration of an electric device to which a negative electrode active material for an electric device of the present invention is applicable will be described by means of the drawings. In this embodiment, as the electric device, a lithium ion secondary battery is exemplified and described.

First, in a negative electrode for a lithium ion secondary battery, which is a typical embodiment of a negative electrode containing the negative electrode active material for an electric device according to the present invention, and a lithium ion secondary battery using the same, a voltage of a cell (single battery layer) is large, and a high energy density and a high output density can be achieved. Therefore, the lithium ion secondary battery, which uses the negative electrode active material for a lithium ion secondary battery of this embodiment, is excellent as those for a driving power

supply and an auxiliary power supply for a vehicle. As a result, the lithium ion secondary battery of this embodiment can be suitably used as a lithium ion secondary battery for a driving power supply or the like for a vehicle. In addition, the lithium ion secondary battery of this embodiment is adequately applicable to lithium ion secondary batteries for mobile devices such as mobile phones.

That is, the lithium ion secondary battery, which is a target of this embodiment, only needs to include the negative electrode active material for a lithium ion secondary battery of this embodiment described below, and other constituent requirements should not be particularly limited.

For example, in a case where the lithium ion secondary batteries are classified by the form and structure, the lithium ion secondary battery is applicable to every conventionally known form and structure of laminate type (flat) batteries, winding type (cylindrical) batteries, and the like. When the laminate type (flat) battery structure is employed, long-term reliability is ensured by a sealing technique such as simple thermocompression, and the laminate type (flat) battery structure is advantageous in terms of cost and workability.

Further, classifying lithium ion secondary batteries by the electric connection manner (electrode structure), the lithium ion secondary battery is applicable to both non-bipolar type (inner parallel connection type) batteries and bipolar type (inner serial connection type) batteries.

In a case where lithium ion secondary batteries are classified by the type of electrolyte layers therein, the lithium ion secondary battery is applicable to batteries including every conventionally known types of electrolyte layers, such as liquid electrolyte batteries whose electrolyte layers are composed of liquid electrolyte such as non-aqueous electrolyte solution and polymer batteries whose electrolyte layers are composed of polymer electrolyte. The polymer batteries are further classified into gel electrolyte batteries employing polymer gel electrolyte (also simply referred to as gel electrolyte) and solid polymer (all-solid-state) batteries employing polymer solid electrolyte (also simply referred to as polymer electrolyte).

Furthermore, in this embodiment, the lithium ion secondary battery is also applicable to an all-solid-state battery using, as a solid electrolyte, a ceramic material, such as $Li_{9.54}Si_{1.74}P_{1.44}S_{11.7}Cl_{0.3}$, which is a super-ionic conductor having ion conductivity two times that of an organic electrolyte and can be fully charged in a few minutes.

Therefore, in the following description, a non-bipolar (inner parallel connection type) lithium ion secondary battery including the negative electrode active material for a lithium ion secondary battery of this embodiment is briefly described using the drawings. Here, the technical scope of the lithium ion secondary battery of this embodiment is not limited to the following description.

<Entire structure of battery>

Fig. 1 is a schematic cross-sectional view schematically illustrating the entire structure of a flat (laminate type) lithium ion secondary battery (hereinafter, also simply referred to as a "laminate type battery") as a typical embodiment of an electric device of the present invention.

As illustrated in Fig. 1, a laminate type battery 10 of this embodiment has a structure in which a substantially rectangular power generating element 21 in which charging and discharging reactions actually proceed is sealed inside laminate sheets 29 serving as outer casing bodies. Herein, the power generating element 21 has a configuration in which positive electrodes, electrolyte layers 17, and negative electrodes are stacked on one another, each positive electrode including positive electrode active material layers 15 disposed on both sides of a positive electrode current collector 12, each negative electrode including negative electrode active material layers 13 disposed on both sides of a negative electrode current collector 11. Specifically, each negative electrode, electrolyte layer, and positive electrode are stacked on one another in this order such that one positive electrode active material layer 15 and the negative electrode active material layer 13 adjacent thereto face each other with the electrolyte layer 17 interposed therebetween.

Accordingly, the adjacent positive electrode, electrolyte layer, and negative electrode constitute one single battery layer 19. Therefore, it can also be said that the laminate type battery 10 illustrated in Fig. 1 has such a configuration that a plurality of single battery layers 19 are stacked on one another to be electrically connected in parallel. Incidentally, each of the outermost positive electrode current collectors which are located in the outermost layers of the power generating element 21 is provided with the positive electrode active material layer 15 on only one side thereof but may be provided with the active material layers on both sides. That is, the outermost layers may be just composed of current collectors each provided with active material layers on both sides instead of the outermost layer-dedicated current collectors each provided with an active material layer only on one side. Further, the positions of the positive electrodes and negative electrodes in Fig. 1 may be inverted so that the outermost negative electrode current collectors are located in both outermost layers of the power generating element 21 and are each provided with a negative electrode active material layer on one side or both sides thereof.

The positive electrode current collectors 12 and the negative electrode current collectors 11 are respectively attached to a positive electrode current collecting plate 27 and a negative electrode current collecting plate 25, which are electrically connected to respective electrodes (positive and negative electrodes), and the current collecting plates

25 and 27 are sandwiched by edges of the laminate sheets 29 and drawn outside the laminate sheets 29. The positive electrode current collecting plate 27 and the negative electrode current collecting plate 25 may be attached to the positive electrode current collector 12 and the negative electrode current collector 11 of the respective electrodes through a positive electrode lead and a negative electrode lead (not illustrated) by ultrasonic welding, resistance welding, or the like as necessary.

The lithium ion secondary battery described above is characterized in a negative electrode. Hereinafter, main members constituting the battery including the negative electrode will be described.

<Active material layer>

The active material layer 13 or 15 contains an active material, and as necessary, further contains other additives.

[Positive electrode active material layer]

The positive electrode active material layer 15 contains a positive electrode active material.

(Positive electrode active material)

Examples of the positive electrode active material include a lithium-transition metal composite oxide such as $LiMn_2O_4$, $LiCoO_2$, $LiNiO_2$, $Li(Ni\text{-}Mn\text{-}Co)O_2$, and a compound in which a part of these transition metals is replaced with another element, a lithium-transition metal phosphate compound, a lithium-transition metal sulfate compound, and the like. In some cases, two or more kinds of the positive electrode active materials may be used together. Preferably, from the viewpoints of capacity and output characteristics, a lithium-transition metal composite oxide is used as the positive electrode active material. More preferably, a composite oxide containing lithium and nickel is used, and more preferably, $Li(Ni\text{-}Mn\text{-}Co)O_2$ and a composite oxide in which a part of these transition metals is replaced with another element (hereinafter, also simply referred to as "NMC composite oxide") are used. The NMC composite oxide has a layered crystal structure in which a lithium atom layer and a transition metal (Mn, Ni, and Co are arranged with regularity) atom layer are alternately stacked with an oxygen atom layer interposed therebetween, one Li atom is included per atom of transition metal M, and the extractable Li amount is twice the amount of spinel lithium manganese oxide, that is, as the supply capacity is twice higher, so that the NMC composite oxide can have a high capacity.

As described above, the NMC composite oxide also includes a composite oxide in which a part of a transition metal element is replaced with another metal element. In this case, examples of another element include Ti, Zr, Nb, W, P, Al, Mg, V, Ca, Sr, Cr, Fe, B, Ga, In, Si, Mo, Y, Sn, V, Cu, Ag, Zn, and the like, Ti, Zr, Nb, W, P, Al, Mg, V, Ca, Sr, and Cr are preferred, Ti, Zr, P, Al, Mg, and Cr are more preferred, and from the viewpoint of improving cycle characteristics, Ti, Zr, Al, Mg, and Cr are further preferred.

In view of a high theoretical discharge capacity, the NMC composite oxide preferably has a composition represented by General Formula (1): $Li_aNi_bMn_cCo_dM_xO_2$ (provided that, in the formula, a, b, c, d, and x satisfy $0.9 \le a \le 1.2$, $0 < b < 1$, $0 < c \le 0.5$, $0 < d \le 0.5$, $0 \le x \le 0.3$, and $b + c + d = 1$. M represents at least one element selected from Ti, Zr, Nb, W, P, Al, Mg, V, Ca, Sr, and Cr). Herein, a represents the atomic ratio of Li, b represents the atomic ratio of Ni, c represents the atomic ratio of Mn, d represents the atomic ratio of Co, and x represents the atomic ratio of M. From the viewpoint of cycle characteristics, it is preferable that in General Formula (1), $0.4 \le b \le 0.6$ be satisfied. Incidentally, the composition of each element can be measured, for example, by inductively coupled plasma (ICP) emission spectrometry.

In general, nickel (Ni), cobalt (Co), and manganese (Mn) are known to contribute to capacity and output characteristics from the viewpoints of improving purity of a material and improving electron conductivity. Ti or the like replaces a part of a transition metal in a crystal lattice. From the viewpoint of cycle characteristics, it is preferable that a part of a transition element be replaced with another metal element, and particularly, it is preferable that $0 < x \le 0.3$ in General Formula (1) be satisfied. It is considered that the crystal structure is stabilized by solid dissolving at least one kind selected from the group consisting of Ti, Zr, Nb, W, P, Al, Mg, V, Ca, Sr, and Cr, and as a result, a decrease in capacity of a battery can be prevented even when charge and discharge are repeated, so that excellent cycle characteristics can be realized.

As a more preferred embodiment, it is preferable, from the viewpoint of improving the balance between the capacity and the lifetime characteristics, that in General Formula (1), b, c, and d satisfy $0.44 \le b \le 0.51$, $0.27 \le c \le 0.31$, and $0.19 \le d \le 0.26$. For example, as compared with $LiCoO_2$, $LiMn_2O_4$, $LiNi_{1/3}Mn_{1/3}Co_{1/3}O_2$, and the like that exhibit actual performance in a general consumer use battery, $LiNi_{0.5}Mn_{0.3}Co_{0.2}O_2$ has a large capacity per unit weight and can improve the energy density, and thus $LiNi_{0.5}Mn_{0.3}Co_{0.2}O_2$ has an advantage that a compact and high capacity battery can be manufactured and is also preferred from the viewpoint of a cruising distance. Incidentally, in terms of having a larger capacity, $LiNi_{0.8}Co_{0.1}Al_{0.1}O_2$ is more advantageous but has a difficulty in lifetime characteristics. In this

regard, $LiNi_{0.5}Mn_{0.3}Co_{0.2}O_2$ has excellent lifetime characteristics like $LiNi_{1/3}Mn_{1/3}Co_{1/3}O_2$.

In some cases, two or more kinds of the positive electrode active materials may be used together. Preferably, from the viewpoints of capacity and output characteristics, a lithium-transition metal composite oxide is used as the positive electrode active material. Incidentally, it is certain that positive electrode active materials other than the above-described materials may be used.

The average particle size of the positive electrode active material contained in the positive electrode active material layer 15 is not particularly limited, but from the viewpoint of having high output, is preferably 1 to 30 μm and more preferably 5 to 20 μm. Incidentally, in the present specification, the term "particle size" means the maximum distance between any two points on the circumference of the active material particle (observation surface) observed by an observation means such as a scanning electron microscope (SEM) or a transmission electron microscope (TEM). In addition, in the present specification, as a value of the "average particle size," a value calculated as an average value of particle sizes of the particles is employed, the particles used for calculation of the average value are observed in several to several tens of fields of view with an observation means such as a scanning electron microscope (SEM) or a transmission electron microscope (TEM). Particle sizes and average particle sizes of other constituents can be determined in the same manner.

The positive electrode active material layer 15 may contain a binder.

(Binder)

The binder is added for maintaining the electrode structure by binding the active materials to each other or the active material and the current collector to each other. The binder used in the positive electrode active material layer is not particularly limited, but for example, the following materials are mentioned. Examples thereof include a thermoplastic polymer such as polyethylene, polypropylene, polyethylene terephthalate (PET), polyethernitrile (PEN), polyacrylonitrile, polyimide, polyamide, polyamide imide, cellulose, carboxymethyl cellulose (CMC), an ethylene-vinyl acetate copolymer, polyvinylchloride, styrene-butadiene rubber (SBR), isoprene rubber, butadiene rubber, ethylene-propylene rubber, an ethylene-propylene-diene copolymer, a styrene-butadiene-styrene block copolymer and a hydrogenated product thereof, or a styrene-isoprene-styrene block copolymer and a hydrogenated product thereof; a fluorine resin such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), or polyvinyl fluoride (PVF); vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), or vinylidene fluoride-chlorotrifluoroethylene-based fluorine rubber (VDF-CTFE-based fluorine rubber); an epoxy resin; and the like. Among them, polyvinylidene fluoride, polyimide, styrene-butadiene rubber, carboxymethyl cellulose, polypropylene, polytetrafluoroethylene, polyacrylonitrile, polyamide, and polyamide imide are more preferred. These suitable binders are excellent in heat resistance, further have extremely wide potential windows, are stable at both of the positive electrode potential and the negative electrode potential, and are usable in the active material layer. These binders may be used singly or in combination of two or more kinds thereof.

The amount of binder contained in the positive electrode active material layer is not particularly limited as long as it is enough to bind the active material, but is preferably 0.5 to 15 mass% and more preferably 1 to 10 mass%, with respect to the active material layer.

The positive electrode (positive electrode active material layer) can be formed by any method of a kneading method, a sputtering method, a vapor deposition method, a CVD method, a PVD method, an ion plating method, and a thermal spraying method, in addition to a general method of applying (coating) a slurry.

[Negative electrode active material layer]

The negative electrode active material layer 13 contains a negative electrode active material.

(Negative electrode active material)

In this embodiment, the negative electrode active material has a quaternary alloy composition represented by Si-Sn-M-Li (M represents one or two or more transition metal elements). That is, the Si-containing alloy constituting the negative electrode active material has an alloy composition (quaternary alloy composition) in which a small amount of Li is added to a ternary alloy represented by Si-Sn-M (M represents one or two or more transition metal elements).

Specifically, the Si-containing alloy constituting the negative electrode active material of this embodiment is characterized by having a composition represented by the following Chemical Formula (1).

[Chem. 3]

$$Si_xSn_yM_zA_aLi_b \quad (1)$$

In the above Chemical Formula (1), M represents one or two or more transition metal elements, A represents an inevitable impurity, and x, y, z, a, and b represent values of mass%, wherein $58 \leq x < 100$, $1.5 \leq y < 100$, $23 \leq z < 100$, $0.3 \leq b \leq 0.9$, a represents the balance, and $x + y + z + a + b = 100$.

In a Si-based negative electrode active material, a Si phase transitions from an amorphous state to a crystalline state when Si and Li (this is not a Li element constituting the Si-containing alloy but a Li ion moving from the positive electrode side) are alloyed with each other at the time of charging and a large volume change (about 4 times) is caused. As a result, there is a problem in that the active material particles themselves are broken and the function as an active material is lost. For this reason, as the negative electrode active material has the composition represented by the above Chemical Formula (1), the phase transition between the amorphous phase and the crystalline phase of the Si phase at the time of charging is suppressed, and thus the collapse of the particles themselves can be suppressed, the function (high capacity) as an active material is maintained, and cycle life (durability) can also be improved. Moreover, it was found that, by adding a small amount of Li, Li exists at the negative electrode side from the beginning (before initial charging), although it was easy to expect that the amount of Li, which can be charged and discharged (intercalated and deintercalated), is reduced and the initial charge-discharge capacity is reduced, surprisingly, an excellent initial charge-discharge capacity can be expressed. As a result, it is also possible to improve the discharge capacity of the battery over a long period of time.

Further, Si and M (particularly Ti) extremely strongly bond with each other, Si and Sn repel each other, and M (particularly Ti) and Sn bond with each other. From this, in the Si-containing alloy of this embodiment, it is found that a microstructure having a Si phase (preferably, an amorphous (non-crystalline or low crystalline) Si phase partially containing Sn and Li) and a silicide phase is obtainable (see Fig. 3). By adding a small amount of Li thereto, although the action mechanism is not clear, it is considered that a high load is not applied to the Si-containing alloy thus obtained and charge-discharge efficiency/discharge-charge efficiency can be stabilized. As described above, by adding a small amount of Li to Si-Sn-M, the characteristics as described above (cycle durability and an increase in capacity of discharge capacity) can be exerted.

Further, the silicide phase ($TiSi_2$ phase or the like) is superior to the Si phase in hardness and electron conductivity. Therefore, the expansion of the Si phase in the charge and discharge process can be suppressed by the silicide phase ($TiSi_2$ phase or the like) in the vicinity thereof effectively suppressing the expansion of the Si phase. According to this, the phase transition between the amorphous phase and the crystalline phase (crystallization into $Li_{15}Si_4$) when Si and Li (this is not a Li element constituting the Si-containing alloy but a Li ion moving from the positive electrode side) are alloyed with each other at the time of charging, is suppressed. As a result, expansion and shrinkage of the Si-containing alloy constituting the negative electrode active material in the charge and discharge process of the electric device can be reduced, and the Si phase can be uniformly reacted by the silicide phase composed of a silicide having electrical conductivity. As a result, the cycle durability can be improved while the electric device using the negative electrode active material has a high capacity.

As described above, the Si-containing alloy according to this embodiment is a quaternary alloy of Si, Sn, Ti, and Li, the total of the composition ranges (mass ratios of the respective constituent elements) is 100 mass%, and a preferred range of the composition ranges (mass ratios of the respective constituent elements) is as follows.

In the alloy composition represented by the above Chemical Formula (1), x (composition ratio of Si; mass%) is not particularly limited as long as y, z, and b are in the range described below. Regarding x, from the viewpoint of the balance between the maintenance of durability against charge and discharge (intercalation and deintercalation of Li ions) and the initial capacity, x is preferably 70 or less, more preferably 68 or less, further preferably 67 or less, and particularly preferably 66 or less, and among these, x is preferably 65 or less. Further, from the above-described viewpoint, x is preferably 60 or more, further preferably 62 or more, and particularly preferably 63 or more, and among these, x is preferably 64 or more. It is excellent that x is in such a range from the viewpoint of the balance between the maintenance of durability against charge and discharge (intercalation and deintercalation of Li ions) and the (initial) capacity, and it is possible to sufficiently improve the durability to obtain a high capacity, so that the effect of the present invention can be more efficiently exerted.

In the alloy composition represented by the above Chemical Formula (1), y (composition ratio of Sn; mass%) is not particularly limited as long as x, z, and b are in the range described below. Regarding y, from the viewpoint of the

balance between the maintenance of durability against charge and discharge (intercalation and deintercalation of Li ions) and the initial capacity, y is preferably 10 or less, more preferably 9 or less, further preferably 8.5 or less, and particularly preferably 8 or less, and among these, y is preferably 7.5 or less and particularly preferably 7 or less. Further, from the above-described viewpoint, y is 1.5 or more, preferably 2 or more, further preferably 2.5 or more, and particularly preferably 3 or more, and among these, y is preferably 3.5 or more. It is excellent that y is in such a range from the viewpoint of being able to reversibly intercalate and deintercalate Li ions at the time of charging and discharging since Sn forms a solid solution or is dispersed in the Si phase and increases the interatomic spacing of Si in the Si phase (increases the distance between the Si tetrahedrons). Furthermore, the possibility that Sn cannot form a solid solution or be dispersed in the Si phase is suppressed and precipitation of a part of Sn as a free Sn phase at the interface between the silicide phase ($TiSi_2$ phase or the like) and the Si phase can be effectively suppressed. According to this, the cycle durability can be sufficiently improved and the effect of the present invention can be more efficiently exerted.

In the composition represented by the above Chemical Formula (1), z (composition ratio of the transition metal element M; mass%) is not particularly limited as long as x, y, and b are in the ranges described above and below. Regarding z, from the viewpoint of the balance between the maintenance of durability against charge and discharge (intercalation and deintercalation of Li ions) and the initial capacity, z is preferably 35 or less, more preferably 34 or less, further preferably 33 or less, and particularly preferably 32 or less, and among these, z is preferably 31 or less and particularly preferably 30 or less. Further, from the above-described viewpoint, z is preferably 24 or more, further preferably 25 or more, and particularly preferably 26 or more, and among these, z is preferably 27 or more, particularly preferably 28 or more, and especially preferably 29 or more. It is excellent that z is in such a range from the viewpoint of the balance between the maintenance of durability against charge and discharge (intercalation and deintercalation of Li ions) and the initial capacity, and it is possible to sufficiently improve the durability to obtain a high capacity, so that the effect of the present invention can be more efficiently exerted. Further, the proportion of the silicide phase in the alloy structure does not become too small, the expansion and shrinkage of Si associated with charge and discharge can be sufficiently suppressed, and durability can be sufficiently improved. Furthermore, since the amount of silicide does not become too large, the amount of Si that can react with Li (this is not a Li metal in the Si-containing alloy but is a Li ion moving from the positive electrode side), and the characteristics of high capacity, which is the maximum attraction of the Si-based alloy, can be sufficiently exerted.

In the composition represented by the above Chemical Formula (1), regarding b (composition ratio of Li; mass%), as described above, by adding a small amount of Li to the Si-Sn-M alloy, a high load is not applied to the Si-Sn-M alloy, and charge-discharge efficiency/discharge-charge efficiency can be stabilized, and as a result, cycle durability can be improved. Further, by adding a small amount of Li, the discharge capacity can also be improved. From such a viewpoint, b is in a range of $0.3 \leq b \leq 0.9$.

With such a range, it is possible to appropriately refine the silicide phase, to enhance the amorphous phase forming ability of the Si phase, and to increase the degree of amorphousness. For this reason, the chemical structure of the a-Si phase is hardly changed even at the time of intercalation and deintercalation of Li associated with charge and discharge, it is possible to obtain still higher cycle durability, and the like, thus it can be said that the effect of the present invention can be more efficiently exerted. However, suitable numerical ranges of the composition ratios of the respective constituent elements described above merely describe the preferred embodiments, and the ranges are within the technical scope of the present invention as long as they are included in the scope of claims.

In the composition represented by the above Chemical Formula (1), $x + y + z + b$ is up to 100 (not exceeding 100).

Incidentally, in the present specification, in the above Chemical Formula (1), the "inevitable impurity" represented by A means that contained in the Si-containing alloy since it has been present in the raw material or inevitably mixed in the manufacturing process. The inevitable impurity is originally unnecessary, but it is allowable impurity since it is contained in a trace amount and does not affect the characteristics of the Si alloy. In the above Chemical Formula (1), allowable amount a of the "inevitable impurity" represented by A is the balance (trace amount) other than the effective component amount of $x + y + z + b$ (up to 100). In the composition represented by the above Chemical Formula (1), a is preferably less than 0.5 and more preferably less than 0.1. Whether or not the negative electrode active material (Si-containing alloy) has the composition of the above Chemical Formula (1) can be confirmed through qualitative analysis by fluorescent X-ray analysis (XRF) and quantitative analysis by inductively coupled plasma (ICP) emission spectroscopy.

The Si-containing alloy constituting the negative electrode active material of this embodiment has the above-described alloy composition, and thus, as described above, the effects that the expansion of Si during charge and discharge can be suppressed and cycle durability and, further, discharge capacity can be improved can be exhibited.

Specifically, in the Si-containing alloy constituting the negative electrode active material of this embodiment, it is considered that, by adding a small amount of Li to the Si-Sn-M alloy, an alloy having a microstructural constitution is obtainable. It is considered that this microstructural constitution is a structural constitution including a silicide phase containing a silicide of a transition metal M as a main component and a Si phase containing Si as a main component (particularly, a Si phase partially containing Sn and Li and containing an amorphous (non-crystalline or low crystalline) Si as a main component) (see Figs. 3 and 4). According to this, it is considered that a silicide of the transition metal M

(particularly, Ti) can be refined. Further, it is considered that the proportion of the Si phase serving as a high capacity active material can be increased. Further, it is considered that the amorphous (non-crystalline or low crystalline Si) phase forming ability can be increased. For these reasons, it is considered that the effects that the expansion of Si during charge and discharge can be suppressed and cycle durability and, further, discharge capacity can be improved can be exerted by refinement and amorphization.

The reason why the above-described action and effect is obtained by the Si-containing alloy constituting the negative electrode active material of this embodiment is not clear in detail, but an action mechanism as described below is considered. Incidentally, the following action mechanism is based on a presumption, and the present invention does not adhere to the following action mechanism at all.

The Si-containing alloy constituting the negative electrode active material of this embodiment has a configuration of having a Si phase (particularly, an amorphous Si phase; a-Si phase) and a silicide phase ($TiSi_2$ phase or the like) in the microstructural constitution. Further, the silicide phase is superior to the Si phase in hardness and electron conductivity. Therefore, the expansion of the Si phase in the charge and discharge process can be suppressed by the silicide phase scattered in the vicinity thereof suppressing the expansion of the Si phase. According to this, the phase transition between the amorphous phase and the crystalline phase (crystallization into $Li_{15}Si_4$) when Si and Li are alloyed with each other at the time of charging, is suppressed. As a result, expansion and shrinkage of the Si-containing alloy constituting the negative electrode active material in the charge and discharge process of the electric device can be reduced, and the Si phase can be uniformly reacted by the silicide phase composed of a silicide having electrical conductivity. As a result, the cycle durability and the discharge capacity can be improved while the electric device using the negative electrode active material has a high capacity.

In the composition represented by the above Chemical Formula (1), the kind of M (transition metal element) is not particularly limited as long as it is an element that forms a silicide with Si (also simply referred to as "silicide forming element" in the present specification). The silicide forming element is preferably at least one kind selected from the group consisting of Ti, Zr, Ni, Cu, Mo, V, Nb, Sc, Y, Co, Cr, and Fe, more preferably at least one kind selected from Ti and Zr, and particularly preferably Ti. These elements have higher electron conductivity than silicides of other elements when forming a silicide and have a high strength. Among these, by selecting Ti as the transition metal element M, it is possible to suppress the phase transition between the amorphous phase and the crystalline phase at the time of Li alloy formation and thus to improve the cycle life and the discharge capacity. Further, according to this, the negative electrode active material has a higher capacity than a conventional negative electrode active material (for example, carbon-based negative electrode active material). Particularly, by selecting Ti as the first element to be added to the negative electrode active material (Si-containing alloy), and adding Sn as the second element to be added and Li as the third element to be added, it is possible to further suppress the phase transition between the amorphous phase and the crystalline phase at the time of Li alloy formation and thus to further improve the cycle life. Therefore, in a preferred embodiment of the present invention, M represents titanium (Ti) in the composition represented by the above Chemical Formula (1).

Incidentally, in a case where the transition metal element M is Ti and two or more phases (for example, $TiSi_2$ and TiSi) having different composition ratios exist in the silicide phase, 50 mass% or more, preferably 80 mass% or more, further preferably 90 mass% or more, particularly preferably 95 mass% or more, and most preferably 100 mass% of the silicide phase is the $TiSi_2$ phase (see Fig. 3).

Next, the particle size of the Si-containing alloy constituting the negative electrode active material in this embodiment is not particularly limited, but is preferably 0.1 to 20 $\mu$m and more preferably 0.2 to 10 $\mu$m as an average particle size D50. The particle size is preferably 5 to 30 $\mu$m and more preferably 10 to 25 $\mu$m as an average particle size D90. Incidentally, in the present specification, the "average particle size D50" means a particle size at 50% of the integrated value (D50) in a particle size distribution measured by a laser diffraction/scattering method.

It is preferable that the above-described Si-containing alloy have a microtextural structure including a silicide phase containing a silicide of a transition metal as a main component and a Si phase containing Si as a main component (preferably, an a-Si phase partially containing Sn and Li and containing an amorphous (non-crystalline or low crystalline) Si as a main component). The silicide phase, particularly, $TiSi_2$ phase is superior to the Si phase, particularly, an a-Si phase in hardness and electron conductivity. Therefore, the expansion of the a-Si phase in the charge and discharge process can be suppressed by the $TiSi_2$ phase suppressing the expansion of the a-Si phase. According to this, the phase transition between the amorphous phase and the crystalline phase (crystallization into $Li_{15}Si_4$) when Si and Li are alloyed with each other at the time of charging, is suppressed. As a result, expansion and shrinkage of the Si-containing alloy in the charge and discharge process can be reduced, and the a-Si phase (particularly, a Si active material) can be uniformly reacted by the silicide phase composed of a silicide having electrical conductivity. As a result, the cycle durability can be improved while the electric device using the negative electrode active material has a high capacity.

The silicide phase contains a silicide of a transition metal element as a main component, and thus M represents one or more kinds of transition metal elements selected from the above-described silicide forming elements. That is, in a case where M represents one transition metal element, M is a silicide forming element constituting the silicide phase.

Further, in a case where M represents two or more transition metal elements, at least one kind of M is a silicide forming element constituting the silicide phase. The rest of the transition metal elements may be a transition metal element to be contained in the Si phase or a silicide forming element constituting the silicide phase. Alternatively, the rest of the transition metal elements may be a transition metal element constituting a phase (transition metal phase) formed as a transition metal crystallizes other than the silicide phase and the Si phase.

In the Si-containing alloy, the silicide phase contains a silicide of a transition metal as a main component. This silicide phase is superior to the Si phase in hardness and electron conductivity. Therefore, the silicide phase can improve the low electron conductivity of the Si phase (particularly, a Si active material) as well as the silicide phase plays a role of maintaining the shape of the Si active material in the Si phase against the stress at the time of expansion. Furthermore, this silicide phase contains a silicide (for example, $TiSi_2$) of a transition metal, and thus exhibits excellent affinity for the Si phase and can suppress cracking at the (crystal) interface particularly by the volume expansion at the time of charging.

Further, M preferably represents titanium (Ti) in the composition represented by the above Chemical Formula (1). Particularly, by selecting Ti as an element to be added to the negative electrode active material (Si-containing alloy), adding Sn as the second element to be added, and adding a small amount of Li as the third element to be added, each phase can be refined. As a result, it is possible to further suppress the phase transition between the amorphous phase and the crystalline phase at the time of Li alloy formation and thus to improve the cycle life (durability) and the discharge capacity. Further, according to this, the negative electrode active material (Si-containing alloy) of the present invention has a higher capacity than a conventional negative electrode active material (for example, carbon-based negative electrode active material). Therefore, the silicide phase containing a silicide of a transition metal as a main component is preferably titanium silicide ($TiSi_2$).

In the above-described silicide phase, containing a silicide "as a main component" means that the silicide accounts for 50 mass% or more, preferably 80 mass% or more, further preferably 90 mass% or more, particularly preferably 95 mass% or more, and most preferably 98 mass% or more of the silicide phase. Incidentally, it is ideal that a silicide accounts for 100 mass% of the silicide phase. However, the alloy may contain inevitable impurities which are present in the raw materials or inevitably mixed in the manufacturing process. Thus, it is practically difficult to obtain the first phase containing silicide at 100 mass%.

In the Si-containing alloy, the Si phase can form an a-Si phase containing non-crystalline or low crystalline Si as a main component by using a mechanical alloy method (MA method). Furthermore, by using the MA method, it is possible to form an a-Si phase partially containing Sn and Li (specifically, Sn and Li are dispersed and form a solid solution (dispersed in a solid solution state) in Si or Sn and Li are (finely) dispersed in Si in the form of being incorporated therein) and containing non-crystalline or low crystalline Si as a main component.

This Si phase (particularly, the a-Si phase) is a phase to be involved in occlusion and release of lithium ions at the time of operation of the electric device (lithium ion secondary battery) of this embodiment and a phase to be electrochemically reactive with Li. The Si phase can occlude and release a large amount of Li per weight and per volume since it contains Si as a main component. However, Si exhibits poor electron conductivity, and thus the Si phase may contain a trace amount of additive elements such as phosphorus and boron, a transition metal, and the like. Incidentally, it is preferable that the Si phase be amorphized more than the silicide phase. By adopting such a configuration, the negative electrode active material (Si-containing alloy) can have a higher capacity. Whether or not the Si phase is amorphized more than the silicide phase can be confirmed by electron diffraction analysis. Specifically, a net pattern (lattice-like spot) in two-dimensional point arrangement is obtained for a single crystal phase, a Debye-Scherrer ring (diffraction ring) is obtained for a polycrystalline phase, and a halo pattern is obtained for an amorphous phase by electron diffraction analysis. The above confirmation is possible by utilizing this.

Further, preferably, Sn contained in the Si phase can also occlude and release a large amount of Li per weight and per volume as compared with a carbon negative electrode material (carbon negative electrode active material).

In the above-described Si phase, containing Si "as a main component" means that the above-described Si accounts for 50 mass% or more, preferably 80 mass% or more, and further preferably 90 mass% or more of the Si phase.

In the above-described Si phase, preferably, the reason why it is described that the Si phase partially contains Sn is considered that, in a case where the Si phase contains Sn, Sn is dispersed in Si and forms a solid solution or dispersed in Si in the form of being incorporated therein (the Sn-Si solid solution or incorporated Sn functions as an active material). Further, the rest of Sn is considered to precipitate not on the Si phase but on the silicide phase, at the boundary portion of the Si phase, and the like to form a Sn phase (to function as an active material).

In the above-described Si phase, preferably, the reason why it is described that the Si phase partially contains Li is considered that, in a case where the Si phase contains Li, Li is dispersed in Si and forms a solid solution or dispersed in Si in the form of being incorporated therein. Further, the rest of Li is considered to precipitate not on the Si phase but inside the silicide phase, on the silicide phase, at the boundary portion of the Si phase, and the like in the form of being dispersed to form a Li phase.

<Microtextural structure of Si-containing alloy>

The Si-containing alloy constituting the negative electrode active material in this embodiment preferably has, as described above, a structure in which a phase (a-Si phase) containing non-crystalline or low crystalline Si as a main component containing Sn (further Li) in a Si crystal structure in form of a solid solution is dispersed, in a mother phase of the silicide phase. That is, it is one of preferred embodiments of the Si-containing alloy according to this embodiment to have a so-called sea-island structure in which islands composed of the a-Si phase as a dispersed phase are dispersed in the sea composed of the silicide phase as a continuous phase. With such a structure, the electron conductivity of the negative electrode active material (Si-containing alloy) can be still further improved, and cracking of the active material can be prevented by relaxing the stress at the time of expansion of the a-Si phase. Incidentally, whether or not the Si-containing alloy has such a microtextural structure can be confirmed, for example, by observing the Si-containing alloy using a high-angle annular dark-field scanning transmission electron microscope (HAADF-STEM) and then performing element intensity mapping for the same fields of view as those of the observation image using EDX (energy dispersive X-ray spectroscopy).

<a-Si phase>

In the Si-containing alloy according to this embodiment, the a-Si phase is a phase containing non-crystalline or low crystalline Si. This Si phase is a phase to be involved in occlusion and release of lithium ions at the time of operation of the electric device (lithium ion secondary battery) of this embodiment and a phase to be electrochemically reactive with lithium (which can occlude and release a large amount of lithium per weight and per volume). Further, it is preferable that Sn (further Li) be present in the crystal structure of Si constituting the a-Si phase in the form of a solid solution. Furthermore, silicon exhibits poor electron conductivity, and thus the a-Si phase may contain a trace amount of additive elements such as phosphorus and boron, a transition metal, and the like.

It is preferable that this a-Si phase be amorphized more than the silicide phase. By adopting such a configuration, the negative electrode active material (Si-containing alloy) can have a higher capacity. Incidentally, whether or not the a-Si phase is amorphized more than the silicide phase can be determined from a diffraction pattern obtained by subjecting each of the observation images of the a-Si phase and the silicide phase using a high-angle annular dark-field scanning transmission electron microscope (HAADF-STEM) to fast Fourier transformation (FFT). That is, the diffraction pattern shown in this diffraction pattern shows a net pattern (lattice-like spot) in two-dimensional point arrangement for a single crystal phase, a Debye-Scherrer ring (diffraction ring) for a polycrystalline phase, and a halo pattern for a non-crystalline phase by electron diffraction analysis. The above confirmation is possible by utilizing this. In this embodiment, the a-Si phase may be non-crystalline or low crystalline, but it is preferable that the a-Si phase be non-crystalline from the viewpoint of realizing higher cycle durability.

Incidentally, the Si-containing alloy according to this embodiment essentially contains Sn, but Sn (further Li) is present not in the silicide phase but in the a-Si phase since Sn is an element which does not form a silicide with Si. Further, in a case where the content of Sn is small, all the Sn elements are present in the crystal structure of Si in the form of a solid solution in the a-Si phase. On the other hand, when the content of Sn is increased, the Sn elements which cannot be present in Si in the form of a solid solution in the a-Si phase aggregate and are present as a crystal phase of Sn simple substance. In this embodiment, it is preferable that such a crystal phase of Sn simple substance be not present.

<Silicide phase>

Meanwhile, the silicide phase constituting the sea (continuous phase) of the sea-island structure described above is a crystal phase containing a silicide ($TiSi_2$ or the like) as a main component. This silicide phase contains a silicide (for example, $TiSi_2$), and thus exhibits excellent affinity for the a-Si phase and can suppress cracking at the crystal interface particularly by the volume expansion at the time of charging. Further, the silicide phase is superior to the a-Si phase in electron conductivity and hardness. In this manner, the silicide phase improves low electron conductivity of the a-Si phase and also plays a role of maintaining the shape of the active material against the stress at the time of expansion. In this embodiment, it is considered that ,since the silicide phase has such characteristics constitutes the sea of a sea-island structure, it is possible to further improve the electron conductivity of the negative electrode active material (Si-containing alloy) and to prevent cracking of the active material by relaxing the stress at the time of expansion of the a-Si phase, and thus it is considered that the silicide phase contributes to the improvement in cycle durability.

Further, in this embodiment, preferably, when the mass ratio of the available-Si phase, which is the Si phase capable of functioning as an active material, and the silicide phase is a value in a predetermined range, furthermore excellent cycle durability can be realized. Specifically, the value of the ratio of the mass ($m_2$) of the silicide phase to the mass ($m_1$) of the available-Si phase in the Si-containing alloy (the ratio of the silicide phase/the available-Si phase = $m_2/m_1$) is preferably 1.6 or more, more preferably 1.7 or more, and further preferably 1.8 or more. From the above-described viewpoint, the value of $m_2/m_1$ is preferably 2.6 or less, more preferably 2.5 or less, further preferably 2.4 or less, and particularly preferably 2.3 or less. Herein, in this embodiment, the mass ratio of the available-Si phase in the Si-containing alloy is not particularly limited, but from the viewpoint securing a sufficient capacity while exerting the characteristics of the other constitutional elements, the ratio of the mass ($m_1$) of the available-Si phase with respect to 100 mass% of the Si-containing alloy is preferably 26 mass% or more, more preferably 27 mass% or more, further preferably 28 mass% or more, and particularly preferably from 28 mass% up to the total amount (mass%) of Si in the alloy, and among them, the ratio is preferably 28 to 35 mass%. According to this embodiment, by substituting a part of Sn (atomic weight = 118.7) with Li (atomic weight = 6.941), it is possible to significantly decrease mass ratios of Sn and Li even in a case where the total number of atoms (the number of atomic moles) of Sn and Li is constant. As a result, it is possible to increase the capacity of the negative electrode active material formed from the Si-containing alloy while maintaining the value $m_2/m_1$ relatively high.

Incidentally, the mass ($m_1$) of the available-Si phase and the mass ($m_2$) of the silicide phase in the Si-containing alloy for calculating the value of $m_2/m_1$ are the theoretical values calculated by the following equation by converting mass% of the constitutional metal element in the alloy composition to at% and assuming that all Ti elements form $TiSi_2$, and the amount of available-Si and the amount of $TiSi_2$ are calculated by this method in Examples to be described later as well.

Amount of available-Si (mass%) = ([at% of Si] - [at% of Ti] × 2) × 28.0855 (atomic weight of Si)/{([at% of Si] - [at% of Ti] × 2) × 28.0855 (atomic weight of Si) + [at% of Sn] × 118.71 (atomic weight of Sn) + [at% of Ti] × 104.038 (formula weight of $TiSi_2$)}

Herein, when calculation is performed using a quaternary alloy having a composition of $Si_{64.7}Sn_{5.2}Ti_{29.8}Li_{0.34}$ as an example, the amount of available-Si (mass%) is calculated to be 29.7 mass% from at% of Si of the alloy = 76.3 at% and at% of Ti of the alloy = 20.6 at%.

Similarly, the silicide ($TiSi_2$) amount can be calculated from

Amount of $TiSi_2$ (mass%) = ([at% of Ti] × 104.038 (formula weight of $TiSi_2$))/{ ([at% of Si] - [at% of Ti] × 2) × 28.0855 (atomic weight of Si) + [at% of Sn] × 118.71 (atomic weight of Sn) + [at% of Ti] × 104.038 (formula weight of $TiSi_2$)}. Herein, also, when calculation is performed using a quaternary alloy having a composition of $Si_{64.7}Sn_{5.2}Ti_{29.8}Li_{0.34}$ as an example, the amount of silicide ($TiSi_2$) (mass%) is calculated to be 64.7 mass% from at% of Si of the alloy = 76.3 at% and at% of Ti of the alloy = 20.6 at%.

<Diffraction peak of Si-containing alloy observed in X-ray diffraction measurement>

As described above, the Si-containing alloy constituting the negative electrode active material in this embodiment is also characterized in that, in a case where M represents Ti in the above-described Chemical Formula (1), the intensities of specific two diffraction peaks observed in the X-ray diffraction measurement have a predetermined relation. That is, it is characterized in that a ratio value (X/Y) of a diffraction peak intensity X of a (311) plane of $TiSi_2$ having a C54 structure in a range of $2\theta$ = 38 to 40° with respect to a diffraction peak intensity Y of a (111) plane of Si in a range of $2\theta$ = 27 to 29° is 1.2 or less in X-ray diffraction (XRD) measurement of the Si-containing alloy using a CuK$\alpha$1 ray.

Herein, titanium disilicide ($TiSi_2$) will be described. In $TiSi_2$, there are two kinds of crystal structures of a C49 structure and a C54 structure. The C49 structure is a metastable structure having a high resistivity of about 60 $\mu\Omega\cdot$cm and is a base-centered orthorhombic structure. Meanwhile, the C54 structure is a stable phase having a low resistivity of about 15 to 20 $\mu\Omega\cdot$cm and is a face-centered orthorhombic structure. Further, $TiSi_2$ having the C49 structure is formed at a low temperature of about 400°C and $TiSi_2$ having the C54 structure is formed at a high temperature of about 800°C. The Si-containing alloy according to this embodiment can be manufactured by a mechanical alloy (MA) method using a mother alloy having the same composition as that of the Si-containing alloy. As shown in Comparative Examples 1 and 2, it is found that, in the manufacturing method, when the MA time is increased, the proportion of $TiSi_2$ having the C54 structure is decreased. Further, as shown in Examples 1 to 4 and Comparative Example 1, it is found that, in the manufacturing method, when the MA time is the same, the Si-containing alloy of Examples to which a small amount of

Li is added has a smaller proportion in $TiSi_2$ having the C54 structure.

Incidentally, in the present specification, the X-ray diffraction measurement for calculating an intensity ratio of the diffraction peak is performed by using a method described later in the section of Examples.

Next, a method of obtaining a diffraction peak intensity in the present specification will be described. For example, the diffraction peak intensity X of the (311) plane of $TiSi_2$ having a C54 structure in a range of $2\theta$ = 38 to 40° can be obtained as follows (see Fig. 3).

First, in the diffraction spectrum obtained by X-ray diffraction measurement, a point at which a perpendicular line at $2\theta$ = 38° intersects with the diffraction spectrum is designated as A. Similarity, a point at which a perpendicular line at $2\theta$ = 40° intersects with the X-ray diffraction spectrum is designated as B. Herein, a line segment AB is designated as the base line, and a point at which a perpendicular line at the diffraction peak of the (311) plane of $TiSi_2$ having a C54 structure intersects with the base line is designated as C. Then, the diffraction peak intensity X of the (311) plane of $TiSi_2$ having a C54 structure can be obtained as the length of a line segment CD connecting a vertex D of the diffraction peak of the (311) plane of $TiSi_2$ having a C54 structure and the point C.

The diffraction peak intensity Y of the (111) plane of Si in a range of $2\theta$ = 27 to 29° can also be obtained by the same method as in the peak intensity X.

That is, it is preferable that a ratio value (X/Y) of a diffraction peak intensity X of a (311) plane of $TiSi_2$ having a C54 structure in a range of $2\theta$ = 38 to 40° with respect to a diffraction peak intensity Y of a (111) plane of Si in a range of $2\theta$ = 27 to 29° is 1.2 or less in X-ray diffraction measurement of the Si-containing alloy constituting the negative electrode active material according to this embodiment. The ratio value (X/Y) is preferably 1.1 or less and more preferably 1.0 or less. When the ratio value (X/Y) is 1.2 or less and more preferably 1.0 or less, an excessive increase in the degree of amorphousness can be effectively suppressed, and it can be suppressed that transition from an amorphous state to a crystalline state causes a large change in volume can be effectively suppressed. For this reason, it is possible to effectively suppress a decrease in cycle life of an electrode and to improve the cycle durability of an electric device such as a lithium ion secondary battery. Incidentally, the lower limit of the ratio value (X/Y) is not particularly limited, but from the viewpoint of a charge-discharge capacity, the lower limit of the ratio value (X/Y) is preferably 0.5 or more.

A method of controlling the ratio value (X/Y) to be 1.2 or less is not particularly limited, but the ratio value (X/Y) can be adjusted by appropriately setting the alloy composition of the Si-containing alloy or production conditions such as MA time and the number of revolutions of an apparatus used in MA (for example, a ball milling apparatus) in the method using an MA method for producing the Si-containing alloy. For example, regarding the alloy composition, when the blending amount of Ti with respect to Si is increased, the amount of silicide generated is increased, and thus the ratio value (X/Y) tends to increase. Further, in the MA method, from the viewpoint of shortening the process time, when the MA time is shortened, the proportion of $TiSi_2$ having a C54 structure is increased. Further, by suppressing the MA time to be short, the crystal of Si is hardly amorphized, and thus the proportion of crystalline Si is increased. Further, it is found that, in a case where the MA time is shortened, according to an increase in amount of Li to be added in a small amount, the proportion of $TiSi_2$ having a C54 structure tends to be decreased and the proportion of crystalline Si tends to be increased (see Fig. 3). From the above-described description, it is found that, by shortening the MA time and adding a small amount of Li, the above-described ratio value (X/Y) can be decreased, and the ratio value (X/Y) can be suppressed to 1.2 or less (see Fig. 4).

As described above, in this embodiment, although the mechanism of improving cycle durability and discharge capacity of an electric device by using the negative electrode active material formed from the Si-containing alloy in which specific two diffraction peak intensities measured by X-ray diffraction measurement have a predetermined relation is not clear, the present inventors have presumed as follows. That is, the Si-containing alloy according to this embodiment can be manufactured by a manufacturing method using an MA method, but by shortening the MA time and adding a small amount of Li, an excessive increase in the degree of amorphousness can be effectively suppressed (see Fig. 4), and the possibility that transition from an amorphous state to a crystalline state causes a large change in volume can be effectively suppressed. For this reason, it is considered that it is possible to effectively suppress a decrease in cycle life of an electrode and to improve the cycle durability of an electric device such as a lithium ion secondary battery. However, the above-described mechanism is merely presumption, and the present invention should not be limitedly interpreted by the above-described mechanism.

<Method for manufacturing negative electrode active material>

The method for manufacturing a negative electrode active material for an electric device according to this embodiment is not particularly limited, and conventionally known knowledge can be appropriately referred to. In this embodiment, as an example of the method for manufacturing a negative electrode active material formed from the Si-containing alloy having the composition represented by General Formula (1) described above, a mechanical alloying (MA) method (production of an alloy by a mechanical alloying treatment) is preferred. As such, conventionally, in order to obtain a Si-containing alloy (a ternary alloy such as a SiSnTi alloy) having a high capacity and high durability, amorphization of the Si-containing alloy by the MA method is considered to be effective. However, in the MA method, there are problems in that the process time is very long (MA time; about 100 hours) and cost is increased. In this regard, by combining a liquid quenching solidification (MS) method and the MA method, the process time can be shortened to some extent (MS + MA time; about 50 hours), but the process still requires long time, and thus a problem arises in that a decrease in cost cannot be achieved. In the manufacturing method of this embodiment, the intensive studies have been conducted in order to further shorten the process time, and as a result, it has been found that, also by adding Li at the time of producing a Si alloy solution and performing the MA treatment to significantly shorten the process time, a Si-containing alloy having a sufficient performance (high capacity, high durability) can be obtained. That is, in this embodiment, there is provided a method for manufacturing a negative electrode active material for an electric device in which the MA treatment is performed with respect to the mother alloy having the same composition as that of the Si-containing alloy to obtain a negative electrode active material, which is formed from the Si-containing alloy, for an electric device. In this way, by using the mother alloy in which Li is added to the ternary alloy, it is possible to significantly shorten the process time when the mechanical alloying treatment is performed and to manufacture a Si-containing alloy having a sufficient performance (high capacity, high durability) and having the composition represented by the above-described General Formula (1). Hereinafter, the manufacturing method according to this embodiment will be described.

(MA method; mechanical alloying treatment)

(Production of mother alloy)

In order to obtain a mother alloy, high purity raw materials (ingots, wires, plates, and the like of a simple substance) for each of silicon (Si), tin (Sn), lithium (Li), and the transition metal element M (for example, titanium (Ti) or the like) are prepared. Subsequently, in consideration of the composition of the Si-containing alloy (negative electrode active material) to be finally manufactured, the mother alloy in the form of an ingot or the like is produced by a known method such as an arc melting method. Herein, as necessary, the mother alloy in the form of an ingot or the like obtained above may be coarsely pulverized by using a proper pulverizer to a size in which the alloy is easily introduced into the ball milling apparatus or the like used in the mechanical alloying treatment, and the mechanical alloying treatment may be performed with respect to the pulverized material thus obtained.

(MA method; mechanical alloying treatment)

The mechanical alloying treatment can be performed by using a conventionally known method. For example, alloying can be achieved by introducing pulverizing balls and raw material powders of alloy into a pulverizing pot and increasing the number of revolutions to apply high energy to the materials by using a ball milling apparatus (for example, a planetary ball milling apparatus). In the alloying treatment, alloying can be performed by increasing the number of revolutions to apply high energy to the raw material powders. That is, heat is generated by the application of high energy, thus the raw material powders are alloyed, and suitable amorphization of the Si phase, dispersing of Sn (further Li) into the Si phase (formation of a solid solution by Sn in the Si phase), and formation of the silicide phase proceed. By increasing (300 rpm or more) the number of revolutions (applied energy) of the apparatus used in the alloying treatment, the compressive strength of the obtained alloy can be improved, and the electrode structure can be maintained while the cracking of the alloy active material particles is suppressed. As a result, it is possible to prevent the peel-off of Si (active material particles) from a conductive network and to prevent irreversible capacity from occurring. Further, since an alloy nascent surface caused by cracking of the alloy active material particles is difficult to generate, by preventing the reaction between the nascent surface and the electrolyte solution and preventing the decomposition of the electrolyte solution, a degradation in cycle durability can be effectively prevented. For these reasons, the cycle durability and the discharge capacity can be improved while maintaining a high capacity of the electric device using the Si-Sn-M-Li quaternary alloy (negative electrode active material). From such viewpoints, the number of revolutions of the ball milling apparatus is preferably 300 rpm or more, more preferably 400 rpm or more, further preferably 500 rpm or more, and particularly preferably 600 rpm. Further, the treatment time (process time) by MA is, from the viewpoint of significantly shortening the process time, preferably 15 minutes or longer, more preferably 30 minutes or longer, further preferably 45 minutes or longer, and particularly preferably 60 minutes (1 hour) or longer. Similarly, from the viewpoint of significantly shortening the process time, the treatment time is preferably 180 minutes (3 hours) or shorter, more preferably 150 minutes (2.5 hours) or shorter, further preferably 120 minutes (2 hours) or shorter, and particularly preferably 90 minutes (1.5 hours) or shorter.

In this embodiment, upon further shortening the time for the mechanical alloying treatment, the energy applied to the Si-containing alloy is changed also by changing the number of revolutions of the apparatus to be used, the number of pulverizing balls, the amount of sample (raw material powders of the alloy) filled, and the like. Therefore, with optimization of conditions in this manner, it is possible to control other conditions such that the time for the mechanical alloying

treatment can be shortened, without changing the energy applied to the Si-containing alloy (upon obtaining an alloy having the same performance).

The mechanical alloying treatment by the method described above is performed in a dry atmosphere since an alloy containing Li is used, but the particle size distribution after the mechanical alloying treatment may significantly greatly vary in some cases. Therefore, it is preferable to perform the pulverization treatment and/or classification treatment for adjusting the particle size.

Incidentally, there are two types of crystal structure, namely, a C49 structure and a C54 structure, in the disilicide ($TiSi_2$) of titanium. In the case of using Ti in the transition metal element M, it has also been confirmed that the disilicide ($TiSi_2$) contained in the Si-containing alloy obtained by conducting a mechanical alloying treatment has a C54 structure (see Fig. 3). Since a C54 structure has a lower resistivity (higher electron conductivity) than a C49 structure, a C54 structure has a more preferable crystal structure as a negative electrode active material.

Hereinbefore, the Si-containing alloy (negative electrode active material) having the composition represented by the above General Formula (1) to be essentially contained in the negative electrode active material layer has been described, but the negative electrode active material layer may contain other negative electrode active materials. Examples of the negative electrode active material other than the predetermined alloy include carbon such as natural graphite, artificial graphite, carbon black, activated carbon, carbon fiber, coke, soft carbon, or hard carbon, a pure metal such as Si or Sn, an alloy-based active material having a composition ratio which deviates from the predetermined composition ratio described above, or a metal oxide such as TiO, $Ti_2O_3$, $TiO_2$ or $SiO_2$, SiO, or $SnO_2$, a complex oxide of lithium and a transition metal (complex nitride) such as $Li_{4/3}Ti_{5/3}O_4$ or $Li_7MnN$, Li-Pb-based alloy, Li-Al-based alloy, Li, and the like. However, from the viewpoint of sufficiently exerting the action and effect to be exhibited by using the Si-containing alloy as the negative electrode active material, the content of the Si-containing alloy with respect to 100 mass% of the total amount of negative electrode active material is preferably 50 to 100 mass%, more preferably 80 to 100 mass%, further preferably 90 to 100 mass%, particularly preferably 95 to 100 mass%, and most preferably 100 mass%.

Subsequently, the negative electrode active material layer 13 contains a binder.

(Binder)

The binder is added for maintaining the electrode structure by binding the active materials to each other or the active material and the current collector to each other. The kind of binder used in the negative electrode active material layer is also not particularly limited, and those described above as the binder used in the Positive electrode active material layer can be used in the same manner. Therefore, the detailed description thereof will be omitted herein.

Incidentally, the amount of binder contained in the negative electrode active material layer is not particularly limited as long as it is enough to bind the active material, but is preferably 0.5 to 20 mass% and more preferably 1 to 15 mass%, with respect to the negative active material layer.

(Requirements common to positive electrode and negative electrode active material layers 15 and 13)

Hereinafter, the requirements common to the positive electrode and negative electrode active material layers 15 and 13 will be described.

The positive electrode active material layer 15 and the negative electrode active material layer 13 contain, as necessary, a conductive aid, an electrolyte salt (lithium salt), an ion conductive polymer, and the like. Particularly, since the Si-containing alloy having low electrical conductivity is used in the active material, the negative electrode active material layer 13 of this embodiment essentially contains a conductive aid.

(Conductive aid)

The conductive aid refers to an additive to be blended for improving the electrical conductivity of the positive electrode active material layer or the negative electrode active material layer. Examples of the conductive aid include carbon materials including carbon black such as acetylene black, graphite, vaporgrown carbon fibers, and the like. When the active material layer contains the conductive aid, an electron network is effectively formed inside the active material layer, thus contributing to an improvement in output characteristics of the battery.

The content of the conductive aid mixed into the active material layer is in a range of 1 mass% or more, more preferably 3 mass% or more, and further preferably 5 mass% or more, with respect to the total amount of active material layer. Further, the content of the conductive aid mixed into the active material layer is in a range of 15 mass% or less, more preferably 10 mass% or less, and further preferably 7 mass% or less, with respect to the total amount of active material layer. The following effects are exerted by regulating the blending ratio (content) of the conductive aid in the active material layer in which the electron conductivity of the active material itself is low, the electrode resistance can

be decreased depending on the amount of conductive aid, to be in the above-described range. That is, it is possible to sufficiently ensure the electron conductivity without hindering the electrode reaction, to suppress a decrease in energy density due to a decrease in electrode density, and thus to attain the improvement in energy density due to the improvement in electrode density.

Further, a conductive binder functioning as both of the conductive aid and the binder may be used instead of the conductive aid and the binder, or may be used together with one or both of the conductive aid and the binder. As the conductive binder, TAB-2 (manufactured by Hohsen Corp.), which is already commercially available, can be used.

(Electrolyte salt (lithium salt))

Examples of the electrolyte salt (lithium salt) include $Li(C_2F_5SO_2)_2N$, $LiPF_6$, $LiBF_4$, $LiClO_4$, $LiAsF_6$, $LiCF_3SO_3$, and the like.

(Ion conductive polymer)

Examples of the ion conductive polymer include polyethylene oxide (PEO)-based and polypropylene oxide (PPO)-based polymers.

The blending ratio of the components contained in the positive electrode active material layer and the negative electrode active material layer is not particularly limited. The blending ratio can be adjusted by appropriately referring to known knowledge on non-aqueous electrolyte secondary batteries.

The thickness of each active material layer (active material layer on one side of the current collector) is also not particularly limited, and conventionally known knowledge on batteries can be appropriately referred to. As an example, the thickness of each active material layer is usually about 1 to 500 μm and preferably 2 to 100 μm in consideration of the intended use (output-oriented, energy-oriented or the like) of the battery and ion conductivity.

<Current collector>

The current collectors 11 and 12 are composed of conductive materials. The size of the current collector is determined in accordance with an intended use of the battery. For example, when a current collector is used in a large size battery required to have a high energy density, a current collector having a large area is used.

The thickness of the current collector is also not particularly limited. The thickness of the current collector is usually about 1 to 100 μm.

The shape of the current collector is also not particularly limited. In the laminate type battery 10 illustrated in Fig. 1, a mesh (expanded grid or the like) and the like can be used in addition to a current collecting foil.

Incidentally, in a case where an alloy thin film of the negative electrode active material is directly formed on the negative electrode current collector 11 by a sputtering method or the like, a current collecting foil is desirably used.

A material constituting the current collector is not particularly limited. For example, a metal, or a resin which is composed of a conductive polymer material or non-conductive polymer material with a conductive filler added thereto may be employed.

Specific examples of the metal include aluminum, nickel, iron, stainless steel, titanium, copper, and the like. Other than, a clad material of nickel and aluminum, a clad material of copper and aluminum, a plating material of combination of these materials, or the like may be preferably used. Further, a foil obtained by coating a surface of metal with aluminum may be used. Of these, from the viewpoints of electron conductivity, battery operating potential, adherence of the negative electrode active material to the current collector by sputtering, and the like, aluminum, stainless steel, copper, and nickel are preferred.

Further, examples of the conductive polymer material include polyaniline, polypyrrole, polythiophene, polyacetylene, polyparaphenylene, polyphenylenevinylene, polyacrylonitrile, polyoxadiazole, and the like. Such a conductive polymer material has a sufficient electrical conductivity without addition of the conductive filler, and thus has advantages of simplifying the manufacturing process and reducing the weight of the current collectors.

Examples of the non-conductive polymer material include polyethylene (PE; high-density polyethylene (HDPE), low-density polyethylene (LDPE), and the like), polypropylene (PP), polyethylene terephthalate (PET), polyethernitrile (PEN), polyimide (PI), polyamide imide (PAI), polyamide (PA), polytetrafluoroethylene (PTFE), styrene-butadiene rubber (SBR), polyacrylonitrile (PAN), polymethylacrylate (PMA), polymethylmethacrylate (PMMA), polyvinylchloride (PVC), polyvinylidene fluoride (PVdF), polystyrene (PS), and the like. Such a non-conductive polymer material may have excellent potential resistance or solvent resistance.

A conductive filler may be added as necessary to the above-described conductive polymer material or non-conductive polymer material. In particular, in a case where the resin constituting the base material of the current collectors is formed from only a non-conductive polymer, a conductive filler needs to be added to impart electrical conductivity to

the resin.

The conductive filler can be used without any particular limitation as long as it is a material having electrical conductivity. Examples of a material excellent in electrical conductivity, potential resistance, or lithium ion blocking properties include a metal, a conductive carbon, and the like. As the metal, although not particularly limited, it is preferable to include at least one kind of metals selected from the group consisting of Ni, Ti, Al, Cu, Pt, Fe, Cr, Sn, Zn, In, Sb, and K, and alloys or metal oxides including the same. Further, the conductive carbon is not particularly limited. Preferably, the conductive carbon includes at least one kind selected from the group consisting of acetylene black, Vulcan (registered trademark), Black Pearl (registered trademark), carbon nanofibers, Ketjen Black (registered trademark), carbon nanotubes, carbon nanohorns, carbon nanoballoons, and fullerene.

The amount of conductive filler added is not particularly limited as long as it is enough to impart a sufficient electrical conductivity to the current collector, and is generally about 5 to 35 mass%.

<Electrolyte layer>

As an electrolyte constituting the electrolyte layer 17, a liquid electrolyte, a polymer electrolyte, or a ceramic material, which is a super-ionic conductor, may be used.

The liquid electrolyte has a configuration in which a lithium salt (an electrolyte salt) is dissolved in an organic solvent. Examples of the organic solvent include carbonates such as ethylene carbonate (EC), propylene carbonate (PC), butylene carbonate (BC), vinylene carbonate (VC), dimethyl carbonate (DMC), diethyl carbonate (DEC), ethylmethyl carbonate (EMC), and methylpropyl carbonate (MPC).

Further, as the lithium salt, a compound that can be added to the active material layers of the electrodes, such as $Li(CF_3SO_2)_2N$, $Li(C_2F_5SO_2)_2N$, $LiPF_6$, $LiBF_4$, $LiAsF_6$, $LiTaF_6$, $LiClO_4$, or $LiCF_3SO_3$, can be employed.

Meanwhile, the polymer electrolytes are classified into a gel electrolyte containing an electrolyte solution and an intrinsic polymer electrolyte not containing an electrolyte solution.

The gel electrolyte has a configuration in which the above-described liquid electrolyte (electrolyte solution) is injected into a matrix polymer formed from an ion conductive polymer. Using a gel polymer electrolyte as the electrolyte is excellent in terms of the point that fluidity of the electrolyte is eliminated and it becomes easy to block ion conduction between the respective layers.

Examples of the ion conductive polymer used as the matrix polymer include polyethylene oxide (PEO), polypropylene oxide (PPO), copolymers thereof, and the like. In such a polyalkylene oxide-based polymer, an electrolyte salt such as a lithium salt is well soluble.

The proportion of the liquid electrolyte (electrolyte solution) in the gel electrolyte should not be particularly limited, but from the viewpoint of ion conductivity or the like, is desirably set to several mass% to about 98 mass%. In this embodiment, the gel electrolyte containing a large amount of electrolyte solution, that is, having a proportion of the electrolyte solution of 70 mass% or more is particularly effective.

Incidentally, in a case where the electrolyte layer is composed of a liquid electrolyte, a gel electrolyte, or an intrinsic polymer electrolyte, a separator may be used in the electrolyte layer. Examples of the specific configuration of the separator (including non-woven fabric) include a microporous membrane formed from polyolefin such as polyethylene and polypropylene, a porous plate, and a non-woven fabric.

The intrinsic polymer electrolyte has a configuration in which a supporting salt (lithium salt) is dissolved in the matrix polymer described above, and does not contain an organic solvent which is a plasticizer. Therefore, liquid leakage from the battery is not concerned and the reliability of the battery can be improved in a case where the electrolyte layer is composed of the intrinsic polymer electrolyte.

The matrix polymer of the gel electrolyte or the intrinsic polymer electrolyte may exhibit excellent mechanical strength by forming a cross-linked structure. To form a cross-linked structure, by using an adequate polymerization initiator, a polymerizable polymer (for example, PEO or PPO) for forming a polymer electrolyte just needs to be subjected to a polymerization treatment such as thermal polymerization, ultraviolet polymerization, radiation polymerization, or electron beam polymerization.

Furthermore, in this embodiment, a ceramic material, such as $Li_{9.54}Si_{1.74}P_{1.44}S_{11.7}Cl_{0.3}$, which is a super-ionic conductor having ion conductivity two times that of an organic electrolyte and can be fully charged in a few minutes may be used as a solid electrolyte. Such a solid electrolyte can be suitably applied to an all-solid-state (type) ceramic battery which is considered as a next generation battery. In such a battery, charging and discharging can be stably performed at a low temperature (-30°C) and a high temperature (100°C).

<Current collecting plate and lead>

A current collecting plate may be used for extracting current out of the battery. The current collecting plate is electrically connected to the current collector and the lead and is extracted out of a laminate sheet as a battery outer

casing member.

The material constituting the current collecting plate is not particularly limited, and a known highly conductive material, which is conventionally used as a current collecting plate for a lithium ion secondary battery, may be used. As the material constituting the current collecting plate, for example, a metallic material such as aluminum, copper, titanium, nickel, stainless steel (SUS), or alloys thereof is preferred, and more preferably, from the viewpoints of light weight, corrosion resistance, and high electrical conductivity, aluminum, copper, or the like is preferred. Incidentally, as the positive electrode current collecting plate and the negative electrode current collecting plate, the same material may be used or different materials may be used.

A positive electrode terminal lead and a negative electrode terminal lead are also used as necessary. As the materials of the positive electrode terminal lead and the negative electrode terminal lead, a terminal lead used in a conventional lithium ion secondary battery can be used. Incidentally, it is preferable that a part extracted from the battery outer casing member 29 be covered with a heat-resistance insulating heatshrinkable tube or the like so that electric leakage due to contact with peripheral devices, wires, and the like does not influence products (for example, automobile components, particularly, electronic devices and the like).

<Battery exterior member>

As the battery outer casing member 29, a known metal can casing can be used, and a bag-shaped casing which can cover the power generating element and uses a laminate film containing aluminum may be used. As the laminate film, for example, a laminate film having a three layer structure which is obtained by stacking PP, aluminum, and nylon in this order, or the like can be used, but the laminate film is not limited thereto at all.

A laminate film is desirable from the viewpoints that the laminate film is excellent in high output and cooling performance and can be suitably used in batteries of large-size devices for EVs and HEVs.

Incidentally, the above-described lithium ion secondary battery can be manufactured by a conventionally known manufacturing method.

<Exterior configuration of lithium ion secondary battery>

Fig. 2 is a perspective view illustrating an exterior of a laminate type flat lithium ion secondary battery.

As illustrated in Fig. 2, a laminate type flat lithium ion secondary battery 50 has a rectangular flat shape, and from both sides of the battery 50, a positive electrode current collecting plate 59 and a negative electrode current collecting plate 58 for extracting electric power are drawn out. A power generating element 57 is wrapped with a battery outer casing member 52 of the lithium ion secondary battery 50, the periphery thereof is thermally fused, and the power generating element 57 is hermetically sealed in a state where the positive electrode current collecting plate 59 and the negative electrode current collecting plate 58 are drawn to the outside. Herein, the power generating element 57 corresponds to the power generating element 21 of the lithium ion secondary battery (laminate type battery) 10 illustrated in Fig. 1. The power generating element 57 includes a plurality of single battery layers (single cells) 19, each of which includes a positive electrode (positive electrode active material layer) 13, an electrolyte layer 17, and a negative electrode (negative electrode active material layer) 15.

Incidentally, the above-described lithium ion secondary battery is not limited to a battery having a laminate type flat shape (laminate cell). The winding type lithium ion battery is not particularly limited and may include a battery having a cylindrical shape (coin cell), a battery having a prismatic shape (prismatic cell), a battery having a rectangular flat shape obtained by deforming the cylindrical shape, further a cylinder cell, and the like. For the cylindrical or prismatic lithium ion secondary battery, the outer casing member thereof is not particularly limited and may be a laminate film, a conventional cylindrical can (metallic can), or the like. Preferably, the power generating element is packed with an aluminum laminate film. Such a configuration can reduce the weight of the lithium ion secondary battery.

Further, the extraction configuration of the positive electrode current collecting plate 59 and the negative electrode current collecting plate 58 illustrated in Fig. 2 is also not particularly limited. The positive electrode current collecting plate 59 and the negative electrode current collecting plate 58 may be drawn out from the same side, the positive electrode current collecting plate 59 and the negative electrode current collecting plate 58 may be individually divided into plural portions to be extracted from different sides, or the like, and the extraction configuration thereof is not limited to the configuration illustrated in Fig. 2. Further, in the winding type lithium ion battery, a terminal may be formed, for example, using a cylindrical can (a metallic can) instead of the current collecting plate.

As described above, the negative electrode and the lithium ion secondary battery using the negative electrode active material for the lithium ion secondary battery of this embodiment can be suitably used as high-capacity power sources of electric vehicles, hybrid electric vehicles, fuel cell vehicles, hybrid fuel cell vehicles, and the like. That is, the negative electrode and the lithium ion secondary battery using the negative electrode active material for the lithium ion secondary battery of this embodiment can be suitably used in vehicle driving power sources and auxiliary power sources

requiring high volume energy density and high volume power density.

Incidentally, in the above-described embodiment, the lithium ion battery has been described as an example of the electric device, but is not limited thereto, and the embodiment can be applied to another type of secondary batteries and also be applied to primary batteries. Further, the embodiment can also be applied to a capacitor as well as the battery.

## Examples

The present invention will be described in more detail using the following examples. However, the technical scope of the present invention is not limited only to the following examples but is defined in the appended claims.

### (Example 1)

[Production of Si-containing alloy]

The Si-containing alloy (composition: $Si_{4.7}Sn_{5.2}Ti_{29.8}Li_{0.34}$) was manufactured by a mechanical alloy method. Specifically, the respective elements were weighed such that Si would be 63.9 mass%, Sn would be 4.9 mass%, Ti would be 29.5 mass%, and Li would be 1.7 mass%, and an alloy ingot was produced using an arc melting furnace. The components of the alloy ingot were, as a result of ICP analysis, Si: 64.7 mass%, Sn: 5.2 mass%, Ti: 29.8 mass%, and Li: 0.34 mass%. The obtained alloy ingot was preliminary pulverized with a mortar into a size of 2 to 3 mm, a planetary ball mill apparatus P-6 manufactured by Fritsch GmbH in Germany was used, zirconia-made milling balls and the preliminary-pulverized alloy were poured into a zirconia-made milling pot, and a mechanical alloy treatment was performed at 400 rpm for 1 hour, thereby obtaining a Si-containing alloy having the above-described composition as the negative electrode active material. The average particle size D50 of the obtained Si-containing alloy (negative electrode active material) powder was 6.3 μm. As melting materials, high purity Si (11N), high purity Ti wire (3N), high purity Sn shot (4N), and high purity lithium (purity: 99% or more) were used.

[Production of negative electrode]

Further, 80 parts by mass of the negative electrode active material, 5 parts by mass of acetylene black as the conductive aid, and 15 parts by mass of polyimide as the binder were mixed and dispersed in N-methylpyrrolidone to obtain a negative electrode slurry. The negative electrode slurry was produced using a defoaming kneader (Thinky AR-100). Thereafter, the negative electrode slurry was uniformly applied on both sides of a negative electrode current collector formed from a copper foil such that the thickness of each negative electrode active material layer would be 30 μm, and dried in a vacuum for 24 hours, thereby obtaining a negative electrode.

[Production of lithium ion secondary battery (coin cell)]

The negative electrode produced above and the counter electrode Li were allowed to face each other, and a separator (polyolefin, film thickness: 20 μm; Cell guard 2400 (separator made of polypropylene; manufactured by Celgard, LLC.) was disposed therebetween. Subsequently, the stacked body of the negative electrode, the separator, and the counter electrode Li was disposed on the bottom side of a coin cell (CR2032, material: stainless steel (SUS316)), Furthermore, a gasket was fitted to the coin cell to maintain the insulation property between the positive electrode and the negative electrode, the following electrolyte solution was injected into the coin cell by using a syringe, a spring and a spacer were stacked thereon, the upper side of the coin cell was superimposed thereon, and caulking was performed to hermetically seal the coin cell, thereby obtaining a lithium ion secondary battery (coin cell). For the counter electrode Li, Li foil (diameter: 15 mm, thickness: 200 μm, manufactured by Honjo Metal Co., Ltd.) was used. Incidentally, for the counter electrode, a positive electrode slurry electrode (for example, a transition metal element such as $LiCoO_2$, $LiNiO_2$, $LiMn_2O_4$, Li(Ni, Mn, Co)$O_2$, Li(Li, Ni, Mn, Co)$O_2$, $LiRO_2$-$LiMn_2O_4$ (R = Ni, Mn, Co) can be also used.

Incidentally, as the electrolyte solution, a solution obtained by dissolving lithium hexafluorophosphate ($LiPF_6$) serving as a lithium salt (support salt) in an organic solvent, which is obtained by mixing ethylene carbonate (EC) and diethylene carbonate (DEC) at a ratio of EC : DEC = 1 : 2 (volume ratio), to have a concentration of 1 mol/L was used.

### (Example 2)

The Si-containing alloy (composition: $Si_{63.9}Sn_{5.4}Ti_{29.9}Li_{0.80}$) was manufactured by a mechanical alloy method. Specifically, the respective elements were weighed such that Si would be 63.3 mass%, Sn would be 4.9 mass%, Ti would be 29.2 mass%, and Li would be 2.6 mass%, and an alloy ingot was produced using an arc melting furnace. The components of the alloy ingot were, as a result of ICP analysis, Si: 63.9 mass%, Sn: 5.4 mass%, Ti: 29.9 mass%, and

Li: 0.80 mass%. The subsequent processes were performed by the same method as in Example 1, thereby producing a Si-containing alloy (negative electrode active material), a negative electrode, and a lithium ion secondary battery (coin cell). Further, also as the melting materials, the same materials as in Example 1 were used. Incidentally, the average particle size D50 of the obtained Si-containing alloy (negative electrode active material) powder was 6.8 μm.

(Example 3)

The Si-containing alloy (composition: $Si_{64.4}Sn_{5.3}Ti_{29.4}Li_{0.88}$) was manufactured by a mechanical alloy method. Specifically, the respective elements were weighed such that Si would be 62.1 mass%, Sn would be 4.8 mass%, Ti would be 28.7 mass%, and Li would be 4.4 mass%, and an alloy ingot was produced using an arc melting furnace. The components of the alloy ingot were, as a result of ICP analysis, Si: 64.4 mass%, Sn: 5.3 mass%, Ti: 29.4 mass%, and Li: 0.88 mass%. The subsequent processes were performed by the same method as in Example 1, thereby producing a Si-containing alloy (negative electrode active material), a negative electrode, and a lithium ion secondary battery (coin cell). Further, also as the melting materials, the same materials as in Example 1 were used. Incidentally, the average particle size D50 of the obtained Si-containing alloy (negative electrode active material) powder was 5.2 μm.

(Example 4)

The Si-containing alloy (composition: $Si_{66.1}Sn_{5.3}Ti_{27.9}Li_{0.74}$) was manufactured by a mechanical alloy method. Specifically, the respective elements were weighed such that Si would be 65.2 mass%, Sn would be 4.9 mass%, Ti would be 27.2 mass%, and Li would be 2.7 mass%, and an alloy ingot was produced using an arc melting furnace. The components of the alloy ingot were, as a result of ICP analysis, Si: 66.1 mass%, Sn: 5.3 mass%, Ti: 27.9 mass%, and Li: 0.74 mass%. The subsequent processes were performed by the same method as in Example 1, thereby producing a Si-containing alloy (negative electrode active material), a negative electrode, and a lithium ion secondary battery (coin cell). Further, also as the melting materials, the same materials as in Example 1 were used. Incidentally, the average particle size D50 of the obtained Si-containing alloy (negative electrode active material) powder was 6.0 μm.

(Comparative Example 1)

The Si-containing alloy ($Si_{65}Sn_5Ti_{30}$) was manufactured by a mechanical alloy method. Specifically, the respective elements were weighed such that Si would be 65 mass%, Sn would be 5 mass%, and Ti would be 30 mass%, and an alloy ingot was produced using an arc melting furnace. The components of the alloy ingot were, as a result of ICP analysis, Si: 65 mass%, Sn: 5 mass%, and Ti: 30 mass%. The subsequent processes were performed by the same method as in Example 1, thereby producing a Si-containing alloy (negative electrode active material), a negative electrode, and a lithium ion secondary battery (coin cell). Further, as the melting materials, the same materials as in Example 1 (excluding Li) were used. Incidentally, the average particle size D50 of the obtained Si-containing alloy (negative electrode active material) powder was 7.1 μm.

(Comparative Example 2)

[Production of Si-containing alloy]

The Si-containing alloy ($Si_{65}Sn_5Ti_{30}$) was manufactured by a mechanical alloy method. Specifically, the respective elements were weighed such that Si would be 65 mass%, Sn would be 5 mass%, and Ti would be 30 mass%, and an alloy ingot was produced using an arc melting furnace. The components of the alloy ingot were, as a result of ICP analysis, Si: 65 mass%, Sn: 5 mass%, and Ti: 30 mass%. The obtained alloy ingot was preliminary pulverized with a mortar into a size of 2 to 3 mm, a planetary ball mill apparatus P-6 manufactured by Fritsch GmbH in Germany was used, zirconia-made milling balls and the preliminary-pulverized alloy were poured into a zirconia-made milling pot, and a mechanical alloy treatment was performed at 400 rpm for 1 hour. The adhered Si alloy powder was scrapped off, the mechanical alloy treatment at 400 rpm for 1 hour was repeated 24 times in total, and the mechanical alloy treatment was performed for 24 hours, thereby obtaining a Si-containing alloy having the above-described composition as a negative electrode active material. The average particle size D50 of the obtained Si-containing alloy (negative electrode active material) powder was 6.3 μm. As melting materials, high purity Si (11N), high purity Ti wire (3N), and high purity Sn shot (4N) were used.

[Production of negative electrode]

Further, 80 parts by mass of the negative electrode active material, 5 parts by mass of acetylene black as the

conductive aid, and 15 parts by mass of polyimide as the binder were mixed and dispersed in N-methylpyrrolidone to obtain a negative electrode slurry. The negative electrode slurry was produced using a defoaming kneader (Thinky AR-100). Thereafter, the negative electrode slurry was uniformly applied on both sides of a negative electrode current collector formed from a copper foil such that the thickness of each negative electrode active material layer would be 30 μm, and dried in a vacuum for 24 hours, thereby obtaining a negative electrode.

[Production of lithium ion secondary battery (coin cell)]

The subsequent processes were performed by the same method as in Example 1, thereby producing a lithium ion secondary battery (coin cell).

The MA time (mechanical alloying treatment time) required for production of the Si-containing alloy in Examples 1 to 4 and Comparative Examples 1 and 2, the incorporated composition of the melting materials, and the actual composition of the obtained Si-containing alloy (ICP analysis) are presented in Table 1.

[Table 1]

| Si-containing alloy (negative electrode active material) | | | | | | | | | | | | | |
|---|---|---|---|---|---|---|---|---|---|---|---|---|---|
| | Test | Incorporated composition | | | | Actual composition (ICP analysis) | | | | | | | |
| Sample | MA time | mass% | | | | mass% | | | | atom% | | | |
| | | Si | Sn | Ti | Li | Si | Sn | Tl | Li | Si | Sn | Tl | Li |
| Example 1 | 1h | 63.9 | 4.9 | 29.5 | 1.7 | 64.7 | 5.2 | 29.8 | 0.34 | 76.3 | 1.5 | 20.6 | 1.6 |
| Example 2 | 1h | 63.3 | 4.9 | 29.2 | 2.6 | 63.9 | 5.4 | 29.9 | 0.80 | 74.3 | 1.5 | 20.4 | 3.8 |
| Example 3 | 1h | 62.1 | 4.8 | | 28.7 4.4 | 64.4 | 5.3 | 29.4 | 0.88 | 74.5 | 1.5 | 20.0 | 4.1 |
| Example 4 | 1h | 65.2 | 4.9 | 27.2 | 2.7 | | 66.1 5.3 | 27.9 | 0.74 | 76.2 | 1.4 | 18.9 | 3.5 |
| Comparative Example 1 | 1h | 65 | 5 | 30 | 0 | 65 | 5 | 30 | 0 | 77.6 | 1.4 | 21.0 | 0 |
| Comparative Example 2 | 24h | | | | | | | | | | | | |

[Evaluation on cycle durability]

The cycle durability of each lithium ion secondary battery (coin cell) produced in each of Examples 1 to 4 and Comparative Examples 1 and 2 was evaluated under the following charge and discharge test conditions.

(Charge and discharge test conditions)

1) Charge and discharge tester: HJ0501SM8A (manufactured by HOKUTO DENKO CORPORATION)
2) Charge and discharge conditions [charge process] 0.3 C, 2 V →10 mV (constant current/constant voltage modes) [discharge process] 0.3 C, 10 mV → 2 V (constant current mode)
3) Thermostatic bath: PFU-3K (manufactured by ESPEC CORP.)
4) Evaluation temperature: 300 K (27°C)

The evaluation cell was charged from 2 V to 10 mV at 0.3 C in constant current/constant voltage modes in a thermostatic bath set at the above-described evaluation temperature by using a charge and discharge tester in the charge process (referred to as the process of intercalating Li into the evaluation electrode). Thereafter, the evaluation cell was discharged from 10 mV to 2 V at 0.3 C in the constant current mode in the discharge process (referred to as the process of deintercalating Li from the evaluation electrode). The charge-discharge cycle described above was designated as one cycle, and the charge and discharge test was performed from the initial (first) cycle to the 50th cycle under the same charge and discharge conditions. Then, ratios of a discharge capacity at the n-th cycle to a discharge capacity at the first cycle (a discharge capacity retention rate [%] per each cycle) are respectively obtained, and a relation between the number of cycles and the discharge capacity retention rate [%] is illustrated in Fig. 5. Herein, n is an integer of 2 to 50. Further, a result for a ratio of a discharge capacity at the 50th cycle to a discharge capacity at the first cycle (durability; a discharge capacity retention rate [%]) is presented in the following Table 2. Further, the charge and discharge test is performed 1 to 50 cycles and ratios of a discharge capacity at the 50-th cycle to a discharge capacity at the first cycle (a discharge capacity retention rate [%] after 50 cycles) are obtained, and a relation between the discharge capacity and the discharge capacity retention rate [%] is illustrated in Fig. 6. Further, the MA time, the actual composition and the configuration phase of the alloy (the available-Si phase, $TiSi_2$ phase (silicide phase), and the battery performance (charge capacity, discharge capacity, initial (first) charge-discharge efficiency) are presented in the following Table 2. Further, the charge-discharge efficiency, the discharge-charge efficiency, and the authentic efficiency of Example 3 are illustrated in Fig. 7, and the charge-discharge efficiency, the discharge-charge efficiency, and the authentic efficiency of Comparative Example 1 are illustrated in Fig. 8. Herein, the following equation is established: Charge-discharge efficiency (%) = Discharge capacity at the n-th cycle/Charge capacity at the n-th cycle × 100. Further, the following equation is established: Discharge-charge efficiency (%) = Charge capacity at the (n+1)-th cycle/Discharge capacity at the n-th cycle × 100. Further, the following equation is established: Authentic efficiency (%) = Charge-discharge efficiency/Discharge-charge efficiency × 100. Incidentally, n is an integer of 1 to 50.

[Table 2]

| Sample | MA time | Actual composition (mass%) | | | | Configuration phase (mass%) | | | Battery performance | | | |
|---|---|---|---|---|---|---|---|---|---|---|---|---|
| | | Si | Sn | Ti | Li | Available-Si phase | $TiSi_2$ phase | Ratio of silicide phase/ available-Si phase | Charge capacity (mAh/g) | Discharge capacity (mAh/g) | Initial charge-discharge efficiency (%) | Durability: discharge capacity retention rate (%) @ 50 cyc. |
| Example 1 | 1h | 64.7 | 5.2 | 29.8 | 0.34 | 29.7 | ; 64.7 | 2.18 | 1700 | 1485 | 87.4 | 93.1 |
| Example 2 | 1h | 63.9 | 5.4 | 29.9 | 0.80 | 28.8 | 65.0 | 2.27 | 1760 | 1517 | 86.1 | 84.7 |
| Example 3 | 1h | 64.4 | 5.3 | 29.4 | 0.88 | 29.9 | 63,9 | 2.14 | | 1697 1478 | 87.1 | 91.1 |
| Example 4 | 1h | 66.1 | 5.3 | 27.9 | 0.74 | 33.4 | 60.6 | 1.81 | 1838 | 1592 | 86.6 | 79.6 |
| Comparative Example 1 | 1h | 65 | 5 | 30 | 0 | 29.8 | 652 | 2.19 | 1557 | 1373 | 88.2 | 49.3 |
| Comparative Example 2 | 24h | | | | | | | | 1446 | 1255 | 86.8 | 94.3 |

[Analysis of textural structure of negative electrode active material]

The textural structure of the Si-containing alloy (negative electrode active material) produced in each of Examples 1 to 4 and Comparative Examples 1 and 2 was confirmed by observing the textural structure thereof using a high-angle annular dark-field scanning transmission electron microscope (HAADF-STEM) and then performing element intensity mapping for the same fields of view as those of the observation image using EDX (energy dispersive X-ray spectroscopy). As a result, regarding Examples 1 to 4 and Comparative Examples 1 and 2, it was confirmed that the textural structure of the Si-containing alloy was a structure having a $TiSi_2$ phase (silicide phase) and a Si phase containing noncrystalline or low crystalline Si as a main component containing Sn (further Li) in a Si crystal structure in form of a solid solution.

Further, the crystal structure of the Si-containing alloy (negative electrode active material) produced in each of Examples 1 to 4 and Comparative Examples 1 and 2 was analyzed by an X-ray diffraction measurement method. An apparatus and conditions used in the X-ray diffraction measurement method are as follows.

Apparatus name: X-ray diffractometer (SmartLab9kW) manufactured by Rigaku Corporation
Voltage/current: 45 kV/200 mA
X-ray wavelength: CuK$\alpha$1

Fig. 3 illustrates X-ray diffraction spectra acquired for each of Si-containing alloys (negative electrode active materials) of Examples 1 to 4 and Comparative Examples 1 and 2. According to the X-ray diffraction spectra illustrated in Fig. 3, in all of Examples 1 to 4 and Comparative Examples 1 and 2, the diffraction peak of a (311) plane of $TiSi_2$ having a C54 structure (a peak position (near 2$\theta$ = about 39°) indicated by the arrow from the description part of "C54 $TiSi_2$" in Fig. 3) and the diffraction peak of a (111) plane of Si (a peak position (near 2$\theta$ = about 28.5°) indicated by the arrow from the description part of "Si" in Fig. 3) were observed. Incidentally, in Comparative Example 2, the diffraction peak of a (111) plane of Si was not almost observed.

Values of X and Y defined below were obtained from the X-ray diffraction spectra acquired for each of Si-containing alloys (negative electrode active materials) of Examples 1 to 4 and Comparative Examples 1 and 2, and a ratio value (X/Y) thereof was calculated. Results thereof are presented in Fig. 4 described below. Herein, X represents a diffraction peak intensity of a (311) plane of $TiSi_2$ having a C54 structure in a range of 2$\theta$ = 38 to 40°. Further, Y represents a diffraction peak intensity of a (111) plane of Si in a range of 2$\theta$ = 27 to 29°, and Fig. 4 is a diagram illustrating a calculation result of a ratio value (X/Y) of those values of X and Y. Incidentally, by this X-ray diffraction measurement, it was also confirmed that all of the transition metal elements (Ti) contained in the Si-containing alloy existed as a silicide ($TiSi_2$) phase.

From the results of Table 2 and Figs. 5 and 6, it is found that Examples 1 to 4 maintain a higher discharge capacity retention rate and have both excellent cycle durability and excellent discharge capacity as compared with Comparative Examples 1 and 2. Further, in Examples using the Si-containing alloy negative electrode, as compared with the negative electrode active material using a carbon material, the negative electrode using the Si-containing alloy has a higher capacity (this point is not illustrated in Comparative Examples using a negative electrode material, and the description thereof is omitted in Comparative Examples since this point is well-known (see BACKGROUND ART)). The reason why a higher capacity is shown and high cycle durability and a high discharge capacity can be realized in this way is considered that the Si-containing alloy constituting the negative electrode active material has a quaternary alloy composition represented by Si-Sn-M-Li (M represents one or two or more transition metal elements). On the other hand, it is found that lithium ion batteries using a negative electrode active material of Comparative Examples have lower cycle durability or a lower discharge capacity as compared with lithium ion batteries using a negative electrode active material of Examples. The reason for this is considered that the Si-Sn-M-Li alloy of Examples containing a small amount of Li can stabilize charge-discharge efficiency/discharge-charge efficiency without a high load being applied to the Si-containing alloy, improve cycle durability, and further improve a discharge capacity as compared with the Si-Sn-Ti alloy of Comparative Examples to which Li is not added, as illustrated in Figs. 7 and 8.

Further, from the results of Figs. 3 and 4, the ratio value (X/Y) of the diffraction peak intensity X of a (311) plane of $TiSi_2$ having a C54 structure/the diffraction peak intensity Y of a (111) plane of Si is preferably 1.2 or less (see Examples 1 to 4 of Fig. 4). When the ratio value (X/Y) is 1.2 or less as in Examples 1 to 4, it is considered that an excessive increase in the degree of amorphousness can be effectively suppressed, and the possibility that transition from an amorphous state to a crystalline state causes a large change in volume can be effectively suppressed. For this reason, it is found that it is possible to effectively suppress a decrease in cycle life of an electrode and to improve the cycle durability (discharge capacity retention rate) of a lithium ion secondary battery.

Reference Signs List

| | |
|---|---|
| 10, 50 | Lithium ion secondary battery (laminate type battery) |
| 11 | Negative electrode current collector |
| 12 | Positive electrode current collector |
| 13 | Negative electrode active material layer |
| 15 | Positive electrode active material layer |
| 17 | Electrolyte layer |
| 19 | Single battery layer |
| 21, 57 | Power generating element |
| 25, 58 | Negative electrode current collecting plate |
| 27, 59 | Positive electrode current collecting plate |
| 29, 52 | Battery outer casing member (laminate sheet) |

## Claims

**1.** A negative electrode active material for an electric device, the negative electrode active material comprising: a Si-containing alloy having a composition represented by the following Chemical Formula (1):

[Chem. 1] $Si_xSn_yM_zA_aLi_b$

(in the above Chemical Formula (1),

M represents one or two or more transition metal elements,
A represents an inevitable impurity, and
x, y, z, a, and b represent values of mass%, wherein $58 \leq x < 100$, $1.5 \leq y < 100$, $23 \leq z < 100$, $03 \leq b \leq 0.9$, a represents the balance, and $x + y + z + a + b = 100$.).

**2.** The negative electrode active material for an electric device according to claim 2, wherein a mass ratio of an available-Si phase with respect to 100 mass% of the Si-containing alloy is 27 mass% or more.

**3.** The negative electrode active material for an electric device according to claim 1 or 2, wherein a ratio of a mass of a silicide phase to a mass of an available-Si phase in the Si-containing alloy is 1.7 or more, the ratio being determined according to methods identified in the description.

**4.** The negative electrode active material for an electric device according to any one of claims 1 to 3, wherein the M represents Ti.

**5.** The negative electrode active material for an electric device according to claim 4, wherein a ratio value (X/Y) of a diffraction peak intensity X of a (311) plane of $TiSi_2$ having a C54 structure in a range of $2\theta = 38$ to 40° with respect to a diffraction peak intensity Y of a (111) plane of Si in a range of $2\theta = 27$ to 29° is 1.2 or less in X-ray diffraction measurement of the Si-containing alloy using a $CuK\alpha1$ ray.

**6.** The negative electrode active material for an electric device according to claim 5, wherein the X/Y is 1.0 or less.

**7.** A method for manufacturing the negative electrode active material for an electric device according to any one of claims 1 to 6, the method comprising producing a Si-containing alloy by a mechanical alloy method using a mother alloy having a same composition as that of the Si-containing alloy.

**8.** A negative electrode for an electric device, the negative electrode being formed by using the negative electrode active material for an electric device according to any one of claims 1 to 6.

**9.** An electric device being formed by using the negative electrode for an electric device according to claim 8.

## Patentansprüche

**1.** Negativelektroden-Aktivmaterial für eine elektrische Vorrichtung, wobei das Negativelektroden-Aktivmaterial umfasst: eine Si-enthaltende Legierung mit einer Zusammensetzung, die durch die folgende chemische Formel (1) dargestellt wird:

[Chem. 1] $Si_xSn_yM_zA_aLi_b$

(in der obigen chemischen Formel (1) stellt

M ein oder zwei oder mehrere Übergangsmetallelemente dar,
A stellt eine unvermeidliche Verunreinigung dar, und
x, y, z, a und b stellen Werte in Massenprozent dar, wobei $58 \leq x < 100$, $1,5 \leq y < 100$, $23 < z < 100$, $0,3 \leq b \leq 0,9$, a den Rest darstellt, und $x + y + z + a + b = 100$ gilt).

**2.** Negativelektroden-Aktivmaterial für eine elektrische Vorrichtung nach Anspruch 2, wobei ein Massenverhältnis einer verfügbaren Si-Phase in Bezug auf 100 Massenprozent der Si-enthaltenden Legierung 27 Massenprozent oder mehr beträgt.

**3.** Negativelektroden-Aktivmaterial für eine elektrische Vorrichtung nach Anspruch 1 oder 2, wobei ein Verhältnis einer Masse einer Silizidphase zu einer Masse einer verfügbaren Si-Phase in der Si-enthaltenden Legierung 1,7 oder mehr beträgt, wobei das Verhältnis gemäß den in der Beschreibung definierten Verfahren bestimmt wird.

**4.** Negativelektroden-Aktivmaterial für eine elektrische Vorrichtung nach einem der Ansprüche 1 bis 3, wobei M Ti darstellt.

**5.** Negativelektroden-Aktivmaterial für eine elektrische Vorrichtung nach Anspruch 4, wobei ein Verhältniswert (X/Y) einer Beugungspeakintensität X einer (311)-Ebene von $TiSi_2$ mit einer C54-Struktur in einem Bereich von $2\Theta = 38$ bis 40° in Bezug auf eine Beugungspeakintensität Y einer (111)-Ebene von Si in einem Bereich von $2\Theta = 27$ bis 29° bei einer Röntgenbeugungsmessung der Si-enthaltenden Legierung unter Verwendung eines CuKαl-Strahls 1,2 oder weniger beträgt.

**6.** Negativelektroden-Aktivmaterial für eine elektrische Vorrichtung nach Anspruch 5, worin X/Y 1,0 oder weniger beträgt.

**7.** Verfahren zum Herstellen des Negativelektroden-Aktivmaterials für eine elektrische Vorrichtung nach einem der Ansprüche 1 bis 6, wobei das Verfahren das Herstellen einer Si-enthaltenden Legierung durch ein mechanisches Legierungsverfahren unter Verwendung einer Mutterlegierung mit derselben Zusammensetzung wie der Si-enthaltenden Legierung umfasst.

**8.** Negative Elektrode für eine elektrische Vorrichtung, wobei die negative Elektrode unter Verwendung des Negativelektroden-Aktivmaterials für eine elektrische Vorrichtung nach einem der Ansprüche 1 bis 6 gebildet ist.

**9.** Elektrische Vorrichtung, gebildet durch die Verwendung der negativen Elektrode für eine elektrische Vorrichtung nach Anspruch 8.

## Revendications

**1.** Matériau actif pour électrode négative pour un dispositif électrique, le matériau actif pour électrode négative comprenant : un alliage contenant du Si présentant une composition représentée par la Formule chimique suivante (1) :

[Formule chimique 1] $Si_xSn_yM_zA_aLi_b$

(dans la Formule chimique ci-dessus (1),

M représente un ou deux éléments métalliques de transition ou davantage,

A représente une impureté inévitable, et
x, y, z, a et b représentent des valeurs de pourcentage de masse, dans lequel $58 \leq x < 100$, $1,5 \leq y < 100$, $23 \leq z < 100$, $0,3 \leq b \leq 0,9$, a représente le solde, et $x + y + z + a + b = 100$).

**2.** Le matériau actif pour électrode négative pour un dispositif électrique selon la revendication 2, dans lequel un rapport de masse d'une phase Si disponible par rapport à 100 % de masse de l'alliage contenant du Si correspond à 27 % de masse ou plus.

**3.** Le matériau actif pour électrode négative pour un dispositif électrique selon la revendication 1 ou 2, dans lequel un rapport d'une masse d'une phase de siliciures à une masse d'une phase Si disponible dans l'alliage contenant du Si est de 1,7 ou plus, le rapport étant déterminé selon des procédés identifiés dans la description.

**4.** Le matériau actif pour électrode négative pour un dispositif électrique selon l'une quelconque des revendications 1 à 3, dans lequel le M représente du Ti.

**5.** Le matériau actif pour électrode négative pour un dispositif électrique selon la revendication 4, dans lequel une valeur de rapport (X/Y) d'une intensité de pic de diffraction X d'un plan (311) de $TiSi_2$ présentant une structure C54 dans une plage de $2\theta = 38$ à 40° par rapport à une intensité de pic de diffraction Y d'un plan (111) de Si dans une plage de $2\theta = 27$ à 29° est de 1,2 ou moins dans une mesure de diffraction de rayons X de l'alliage contenant du Si au moyen d'un rayon CuKa1.

**6.** Le matériau actif pour électrode négative pour un dispositif électrique selon la revendication 5, dans lequel le rapport X/Y est de 1,0 ou moins.

**7.** Procédé de fabrication du matériau actif pour électrode négative pour un dispositif électrique selon l'une quelconque des revendications 1 à 6, le procédé comprenant une production d'un alliage contenant du Si par un procédé d'alliage mécanique faisant appel à un alliage mère présentant une même composition que celle de l'alliage contenant du Si.

**8.** Électrode négative pour un dispositif électrique l'électrode négative étant constituée au moyen d'un matériau actif pour électrode négative pour un dispositif électrique selon l'une quelconque des revendications 1 à 6.

**9.** Dispositif électrique constitué en utilisant l'électrode négative pour un dispositif électrique selon la revendication 8.

FIG. 1

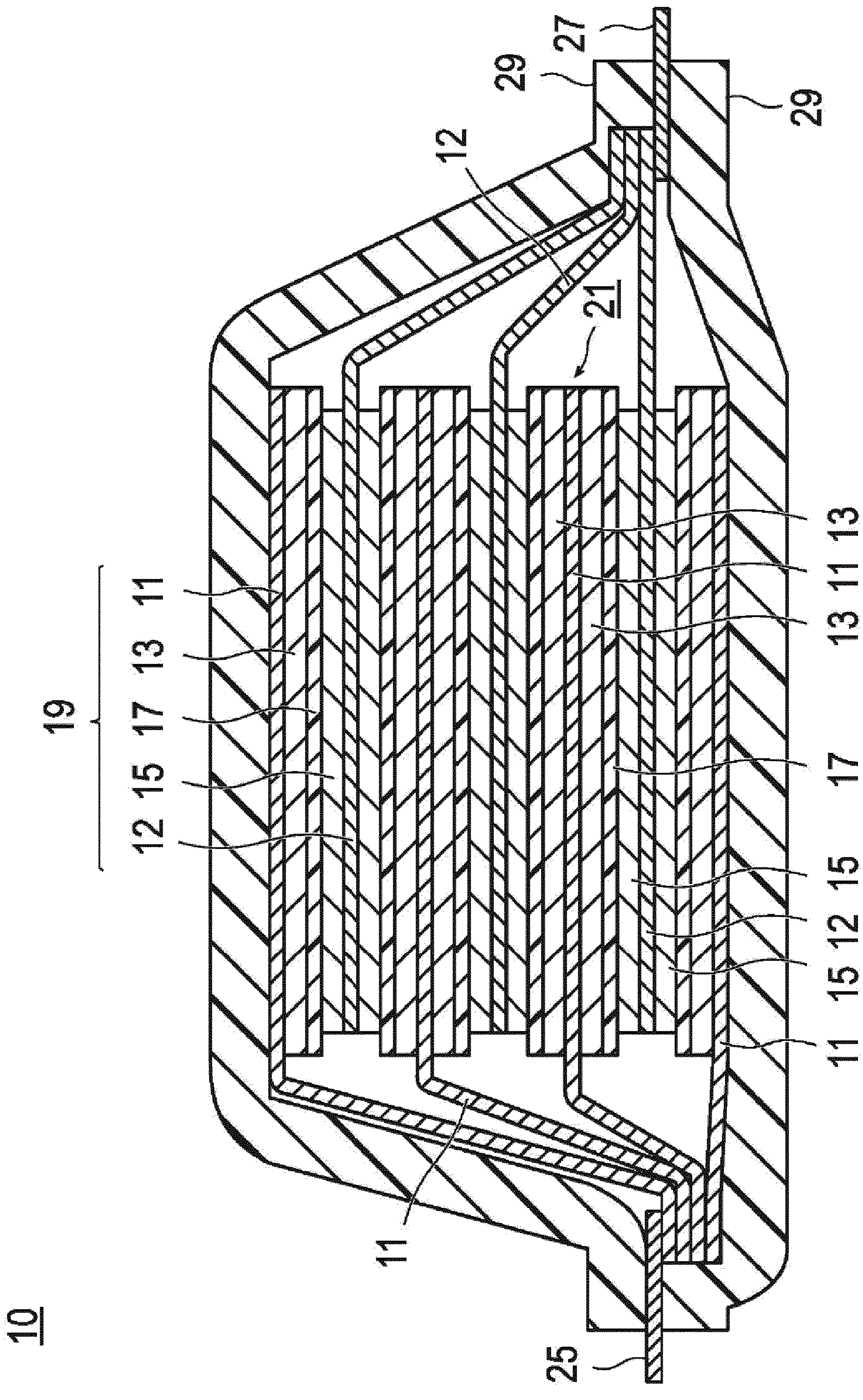

FIG. 2

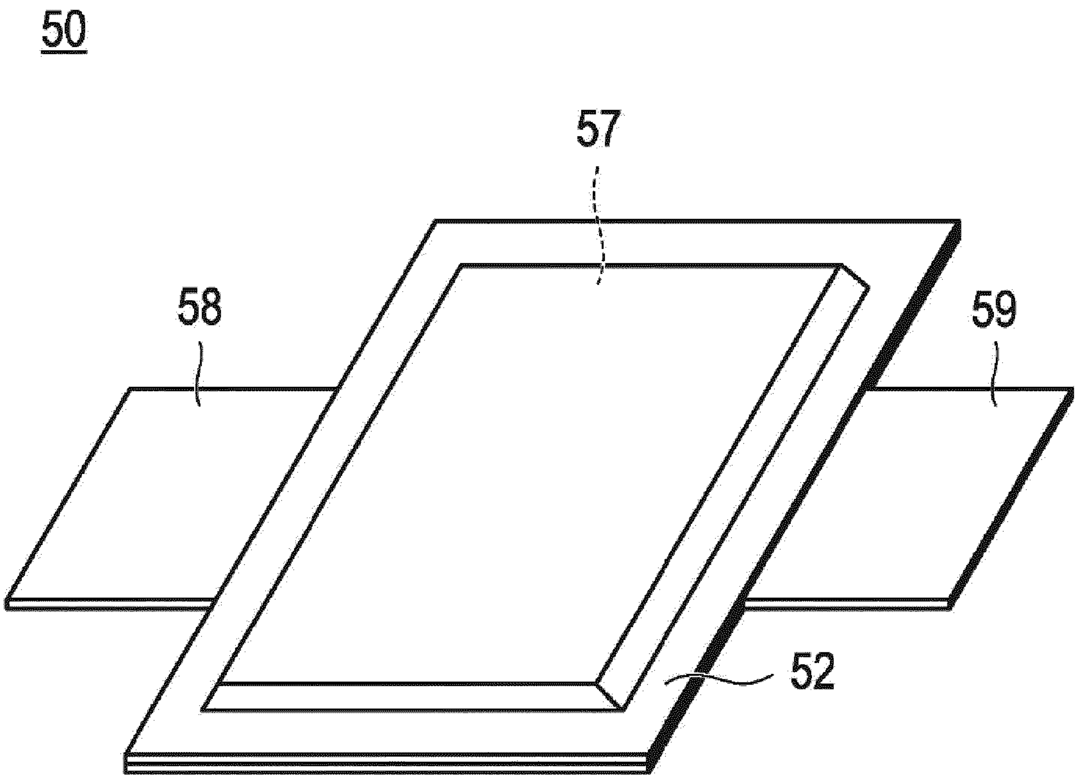

FIG. 3

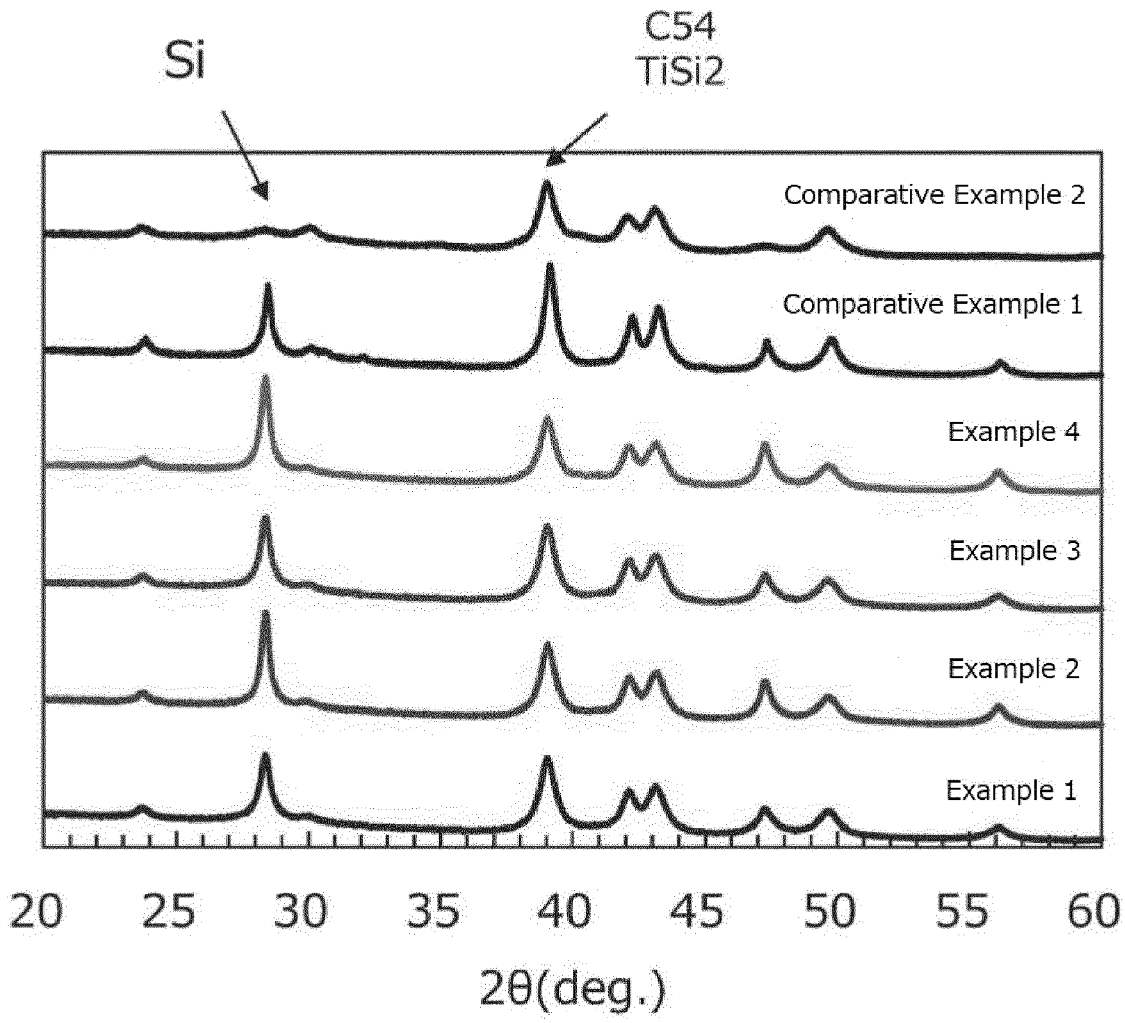
Si
C54
TiSi2
Comparative Example 2
Comparative Example 1
Example 4
Example 3
Example 2
Example 1
20
25
30
35
40
45
50
55
60
2θ(deg.)

FIG. 4

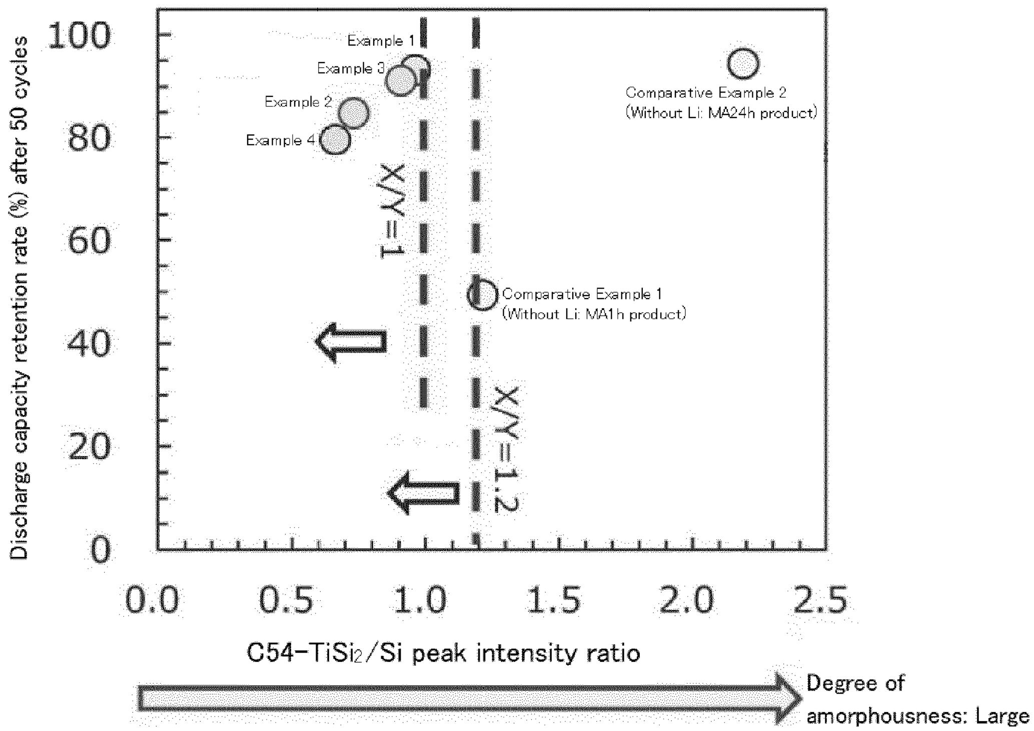
Discharge capacity retention rate (%) after 50 cycles
100
80
60
40
20
0
Example 1
Example 3
Example 2
Example 4
X/Y=1
X/Y=1.2
Comparative Example 2
(Without Li: MA24h product)
Comparative Example 1
(Without Li: MA1h product)
0.0
0.5
1.0
1.5
2.0
2.5
C54-TiSi2/Si peak intensity ratio
Degree of
amorphousness: Large

FIG. 5

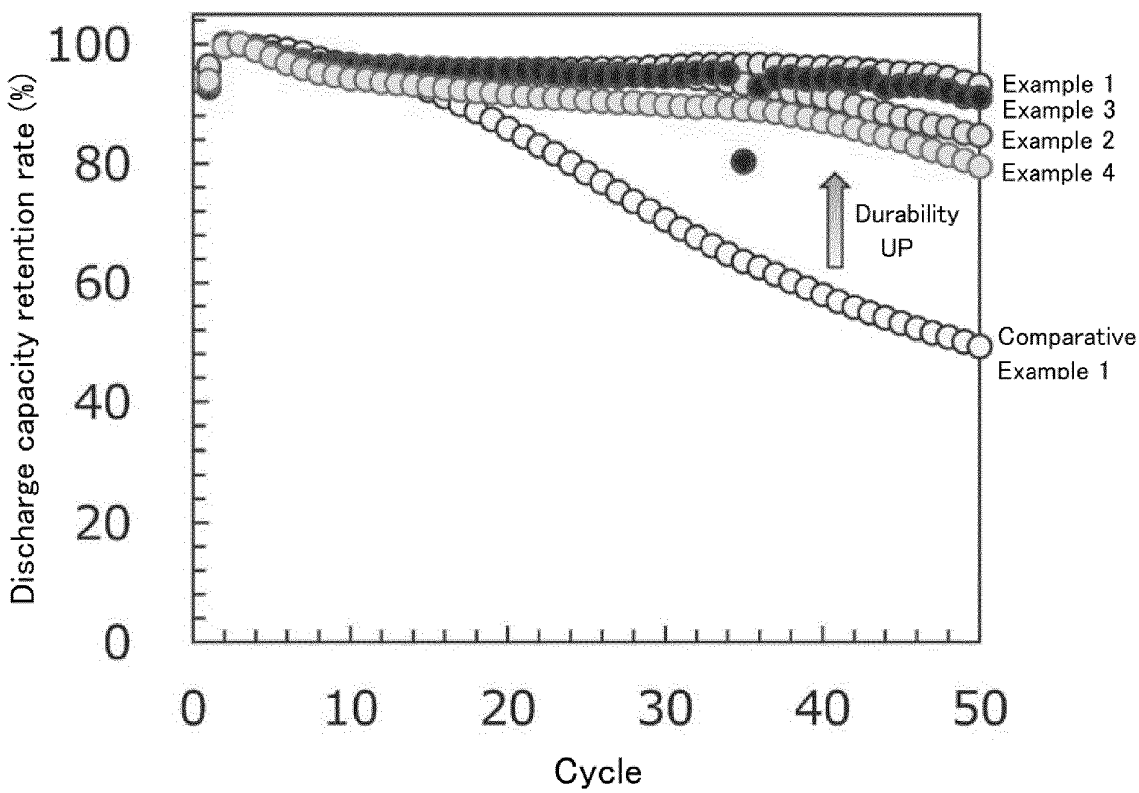
Discharge capacity retention rate (%)
100
80
60
40
20
0
Example 1
Example 3
Example 2
Example 4
Durability
UP
Comparative
Example 1
0
10
20
30
40
50
Cycle

FIG. 6

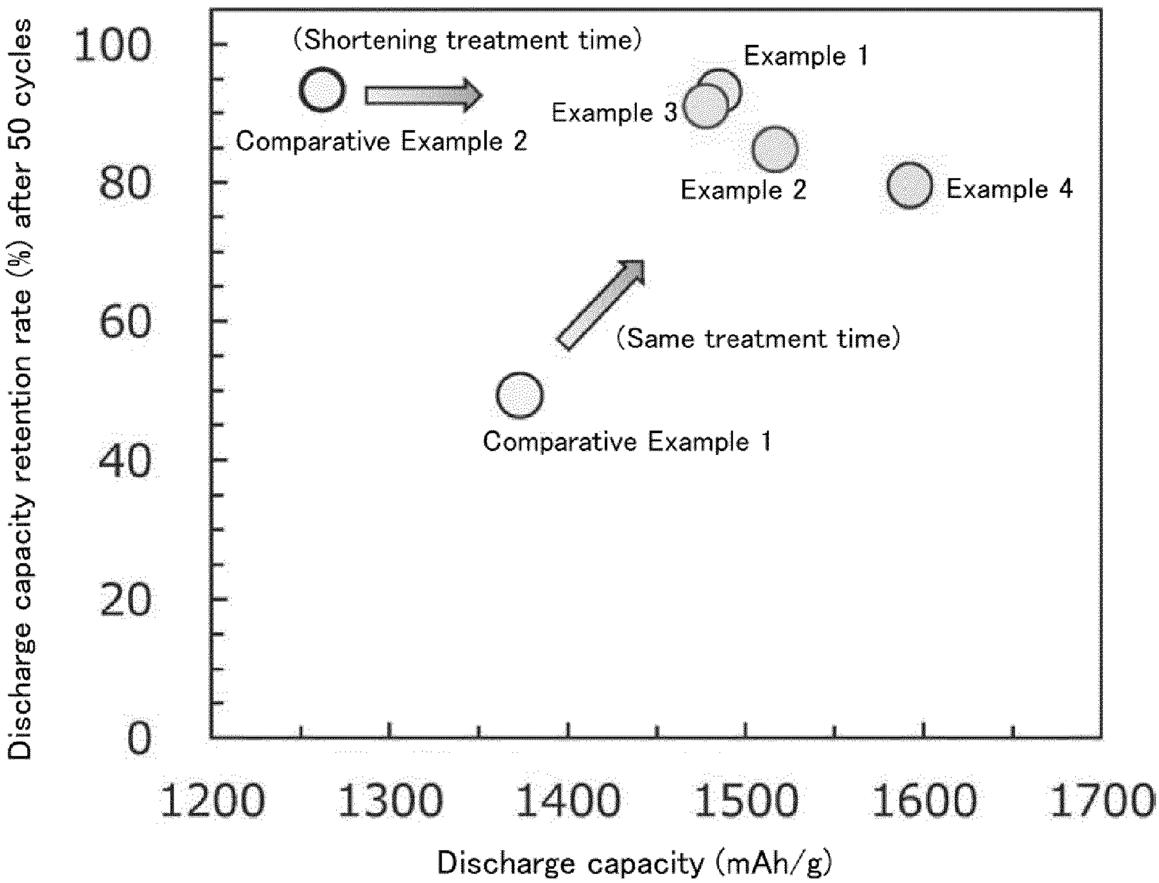
(Shortening treatment time)
Comparative Example 2
Example 1
Example 3
Example 2
Example 4
(Same treatment time)
Comparative Example 1
100
80
60
40
20
0
1200
1300
1400
1500
1600
1700
Discharge capacity retention rate (%) after 50 cycles
Discharge capacity (mAh/g)

FIG. 7

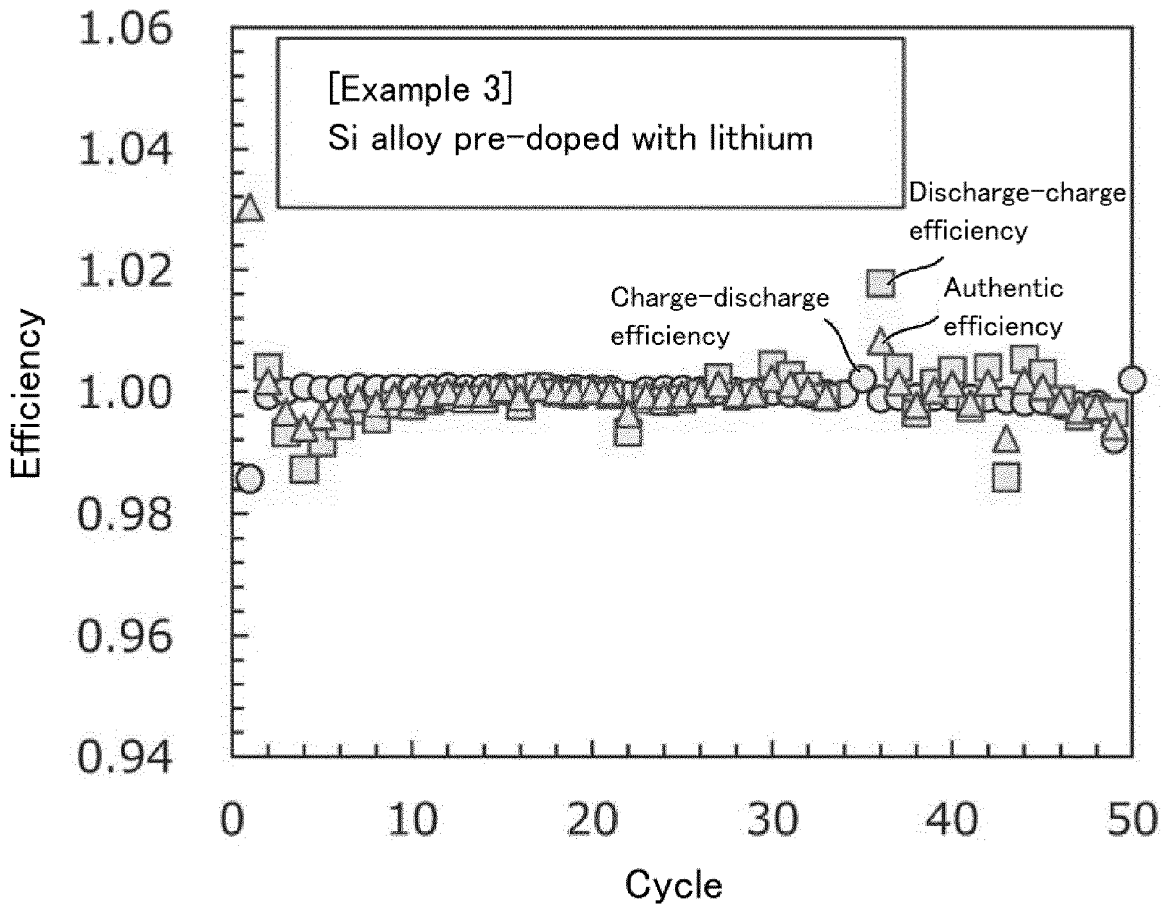
[Example 3]
Si alloy pre-doped with lithium
Discharge-charge efficiency
Authentic efficiency
Charge-discharge efficiency
Efficiency
1.06
1.04
1.02
1.00
0.98
0.96
0.94
0
10
20
30
40
50
Cycle

FIG. 8

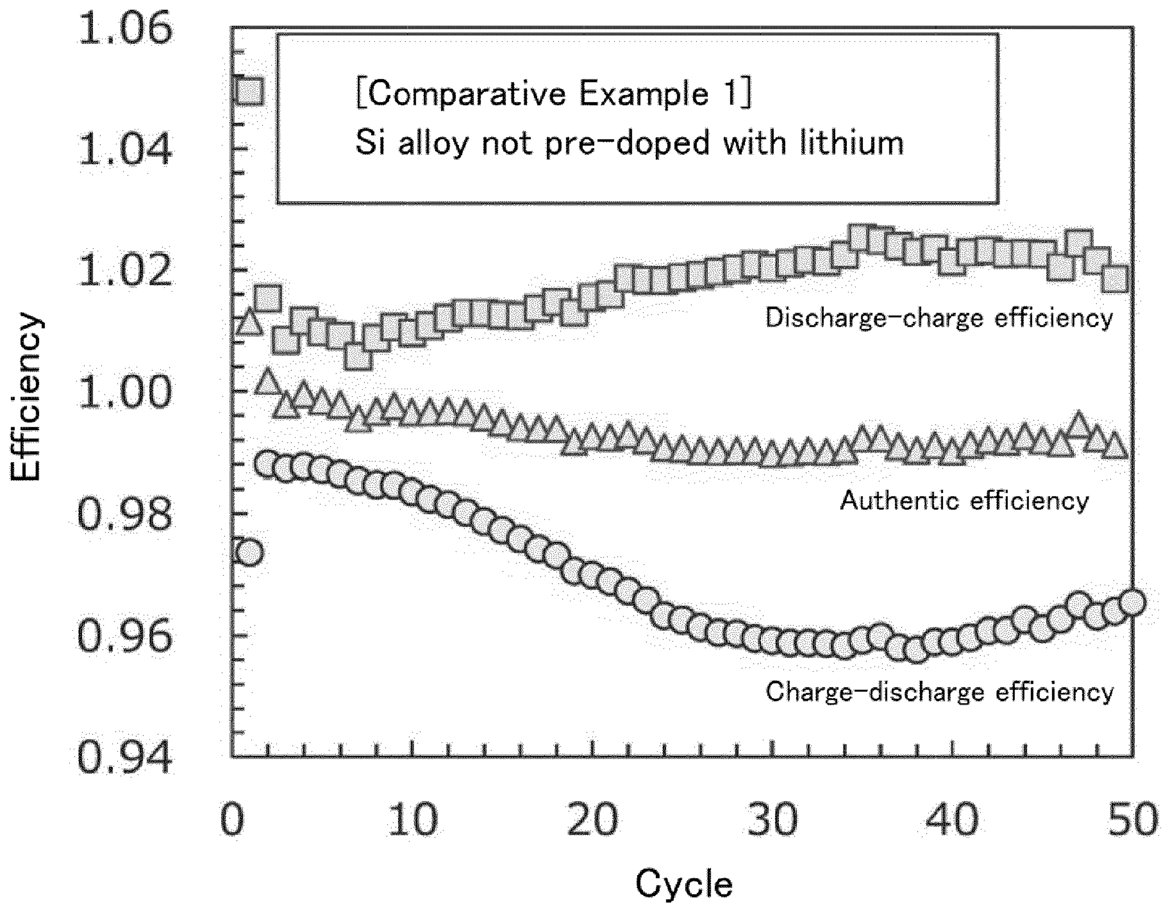
[Comparative Example 1]
Si alloy not pre-doped with lithium
1.06
1.04
1.02
1.00
0.98
0.96
0.94
Efficiency
0
10
20
30
40
50
Cycle
Discharge-charge efficiency
Authentic efficiency
Charge-discharge efficiency

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2006129415 A
- US 2006051675 A1
- JP H11260567 A

### Non-patent literature cited in the description

- Modelling and Simulation. **FEIFEI FAN et al.** Materials Science and Engineering. IOP Publishing, vol. 21, 74002ff